(19) **Europäisches Patentamt**

**European Patent Office**

**Office européen des brevets**

(11) **EP 0 845 191 B1**

(12) **EUROPEAN PATENT SPECIFICATION**

(45) Date of publication and mention
of the grant of the patent:
**15.11.2000 Bulletin 2000/46**

(51) Int Cl.⁷: **H04N 7/34**

(86) International application number:
**PCT/IE96/00052**

(21) Application number: **96927851.4**

(22) Date of filing: **13.08.1996**

(87) International publication number:
**WO 97/07635 (27.02.1997 Gazette 1997/10)**

(54) **A METHOD AND APPARATUS FOR COMPRESSING DIGITAL IMAGE DATA**

VERFAHREN UND VORRICHTUNG ZUR KOMPRESSION VON DIGITALEN BILDDATEN

PROCEDE ET APPAREIL DE COMPRESSION DE DONNEES RELATIVES A DES IMAGES NUMERIQUES

(84) Designated Contracting States:
**BE CH DE DK ES FR GB IE IT LI NL SE**

(30) Priority: **14.08.1995 IE 950613**

(43) Date of publication of application:
**03.06.1998 Bulletin 1998/23**

(73) Proprietor: **Barkfort Limited**
**Malahide, County Dublin (IE)**

(72) Inventors:
 • **KENNEDY, Jonathan, Marshall, Thomas**
 **Malahide, County Dublin (IE)**
 • **KENNEDY, Simon Frederick**
 **Malahide, County Dublin (IE)**
 • **KENNEDY, Nicholas Paul**
 **Portmarnock, County Dublin (IE)**
 • **MARSHALL, David**
 **Malahide, County Dublin (IE)**

(74) Representative: **Gorman, Francis Fergus et al**
**F. F. Gorman & Co.**
**54, Merrion Square**
**Dublin 2 (IE)**

(56) References cited:
| | |
|---|---|
| EP-A- 0 096 220 | EP-A- 0 434 208 |
| EP-A- 0 479 563 | EP-A- 0 536 801 |
| FR-A- 2 524 740 | FR-A- 2 700 230 |
| US-A- 4 809 350 | US-A- 4 941 194 |

• **SIGNAL PROCESSING OF HDTV, L'AQUILA, FEB. 29 - MAR. 2, 1988, no. WORKSHOP 2, 29 February 1988, CHIARIGLIONE L, pages 207-212, XP000075055 JUHA SALO ET AL: "A NEW TWO DIMENSIONAL PREDICTOR DESIGN FOR DPCM CODING OF VIDEO SIGNALS"**
• **SIGNAL PROCESSING OF HDTV, 2, TURIN, AUG. 30 - SEPT. 1, 1989, no. WORKSHOP 3, 30 August 1989, CHIARIGLIONE L, pages 511-518, XP000215267 CARONNA G: "ADAPTIVE DPCM WITH CONDITIONAL CODING (*)"**
• **IEEE TRANSACTIONS ON COMMUNICATIONS, vol. 26, no. 11, November 1978, pages 1671-1682, XP002020039 ALI HABIBI ET AL: "POTENTIAL DIGITIZATION/COMPRESSION TECHNIQUES FOR SHUTTLE VIDEO"**
• **INSTITUTE OF ELECTRICAL AND ELECTRONICS ENGINEERS. NTC RECORD '72. NATIONAL TELECOMMUNICATIONS CONFERENCE, DECEMBER 4-6,1972, HOUSTON TEXAS., pages 20C-1-20C-4, XP002026889 F. A. PERKINS: "Performance of a digital TV system, Part I: Source Encoding"**
• **PROCEEDINGS OF THE ASILOMAR CONFERENCE, PACIFIC GROVE, NOV. 1 - 3, 1993, vol. 2 OF 2, 1 November 1993, INSTITUTE OF ELECTRICAL AND ELECTRONICS ENGINEERS, pages 852-855, XP000438417 FLEMING LURE Y S ET AL: "REVERSIBLE COMPRESSION OF MEDICAL IMAGES USING DECOMPOSITION AND DECORRELATION METHODS"**

- **ELECTRONICS AND COMMUNICATIONS IN JAPAN, PART 1 (COMMUNICATIONS), JAN. 1988, USA, vol. 71, no. 1, ISSN 8756-6621, pages 87-94, XP002026890 SATO Y ET AL: "Data compression of gray-scale images by level plane coding"**

**Description**

The present invention relates to a method and apparatus for compressing digital image data.

Images are commonly stored and transmitted in digital form. Where such images include greyscale, the value of the greyscale of each pixel is provided in digital form, typically, in binary code. In images where a large range of greyscale values are required, for example, in X-rays, it is not unusual to code the greyscale levels in eight bit binary codes, thus giving 256 levels of greyscale. In general, such images are provided in raster format which comprise a plurality of horizontal scan lines, each line containing a plurality of individuals pixels, each of which is assigned a greyscale value which specifies the level of greyscale corresponding to that point in the image. Typically, the level of greyscale is defined in each pixel by an eight to twelve bit code. Because of the large number of bits which are used for defining the level of greyscale in each pixel, an image stored in raster format requires a relatively large storage capacity, and additionally, takes up a lot of bandwidth on communication channels for transmission of the image. Even in the case of a black and white image with greyscale, the storage capacity is high. In the case of colour images, where three primary colours and the corresponding intensities of the respective colours are required to define each pixel of a colour image, the storage capacity is increased by a factor of three. Various attempts have been made to compress such images, however, such attempts to date suffer from a number of disadvantages. Firstly, many compression methods are not lossless, in other words, between compression and decompression, part of the digital data making up the image is lost, and an accurate reconstruction of the image after decompression cannot be prepared. While in some applications such losses are acceptable, they are entirely unacceptable in many cases, typically, in images relating to medicine and diagnostic medicine, for example, X-rays and the like. Image compression systems which are essentially lossless suffer from the disadvantage that the compression ratio is relatively low, and thus in many cases, little saving on the storage space or the bandwidth occupied by such images in the transmission thereof is gained. Even where compression ratios are reasonable, such image compression systems tend to be relatively complex, complicated and time-consuming, and also may require large storage space to effect the compression. Typical image compression systems are described in U.S. Patent Specification No. 4,809,350, European Patent Specification No. 0,479,563 and European Patent Specification No. 0,536,801. The image compression methods described in these three specifications suffer from one or more of the disadvantages discussed above.

For example, U.S. Specification No. 4,809,350 discloses a compression process in which an image data value is predicted for each region, and the actual data value of each region is subtracted from the predicted data value to produce a difference value. The difference value is compressed by coding. However, in this compression process because only one prediction of image data value is made for each region, the compression process tends to be relatively inefficient.

Another compression system is disclosed by Salo and Nevo in a paper entitled "A new two dimensional predictor designed for DPCM coding of video signals" in the publication "Signal Processing of HDTV, L'Aquila Workshop No.2", edited y Chiariglione, at pages 207 to 212. In this article Salo and Nevo disclose a two dimensional, intraframe, non-adaptive predictor design utilising non-linear techniques. The prediction is based on selecting the median of five one dimensional linear predictors within a four pixel neighbourhood on a frame. The median predicted value is then subtracted from the actual value of the region and coded. The predictors used by Salo and Nevo are relatively complex and require weighting of the actual values on which predictions are made. In particular, the predictors of Salo and Nevo are not balanced, and thus the method tends to be relatively inefficient.

Caronna in a paper entitled "Adaptive DPCM with conditional coding" published in "Signal Processing of HDTV, II" edited by Chiariglione at pages 511 to 518, discloses a compression method in which a plurality of predictions are made for each picture element, and the prediction which yields the minimum prediction error is selected. The difference value between the selected prediction and the actual value of the picture element is then coded. However, this method requires prediction overheads to be transmitted with the coded values to allow the receiver to identify which predictor has been used on the transmitter side. Accordingly, this method tends to be relatively inefficient.

There is therefore a need for a method for compressing digital image data which overcomes the problems of known digital image data systems and which provides lossless or effectively lossless compression, while at the same time providing reasonable compression.

The present invention is directed towards providing such a method and apparatus for compressing digital image data.

The term "region" as used throughout this specification and the claims means one pixel or a group of adjacent pixels.

According to the invention, there is provided a method for compressing digital image data, the method comprising the steps of

sequentially scanning a plurality of regions of the image data and determining the actual values of the image data in respective regions,
making at least three predictions of the value of image data for each of at least some of the regions based on the determined actual values of the image data of some of the already scanned regions which are adjacent to the region for which the value of image data is being predicted,

comparing each of the at least three predicted values of image data with the actual value of image data of the corresponding region for each region for which a prediction is made,

computing the values of the difference between the respective predicted values of image data and the actual value of image data for each region for which a prediction is made,

selecting the median difference value of the at least three difference values for each region for which a prediction is made, and

compressing the respective median difference values,

wherein

a first one of the at least three predictions of image data values of each region for which a prediction is being made is based on the actual image data value of a first region adjacent to the region for which the prediction is being made, the first region lying in a row in which the region for which the prediction is being made lies,

a second one of the at least three predictions of image data values of each region for which a prediction is being made is based on the actual image data value of a second region adjacent to the region for which the prediction is being made, the second region lying in a column in which the region for which the prediction is being made lies, and

a third one of the at least three predictions of image data values of each region for which a prediction is being made is based on the gradients of actual image data values from a third to the first region and from the third region to the second region, the third region being located adjacent to the first and second regions and lying in the row in which the second region lies, and in the column in which the first region lies.

In one aspect of the invention, the digital image data is scanned region by region as a matrix array of regions.

Advantageously, each third prediction of the image data value takes into account the slopes of the gradients.

In one aspect of the invention, one of the two regions on which a prediction is based lies closer to the region for which the prediction is being made than the other of the said two regions, and the region of the said two regions which is closest to the region for which the prediction is being made is weighted.

Preferably, a prediction of the data value of every region of the digital image is made.

In one aspect of the invention, the respective median difference values are compressed by encoding the median difference values with respective variable length codes, unique codes being assigned to the respective median difference values.

Preferably, the shortest code is assigned to the most frequently occurring median difference value, and the longest code is assigned to the least frequently occurring median difference value.

Advantageously, the codes are different for the positive and negative values of the same absolute median difference values.

In one aspect of the invention, the codes assigned to the median difference values are binary codes.

Advantageously, the bit length of the longest code for the median difference values does not exceed the bit length of the data value of any region.

In one aspect of the invention, the actual data of a region is retained instead of the median difference value for that region should the median difference value for that region exceed a predetermined value. Preferably, a first flag means is set to indicate that the data following the flag means is the actual data value of the region.

In another aspect of the invention, a second flag means is set to indicate a run of actual data values where the median difference values of a run of regions exceeds a predetermined value. Preferably, the number of actual data values included in the run is associated with the second flag means. Advantageously, the second flag means is provided before the run of actual data values.

Ideally, the coded median difference values and the actual data values for the respective regions are stored in a predetermined format for subsequent retrieval and decompression.

In general, the most frequently occurring median difference value is assigned the value zero.

In another aspect of the invention, noise is separated from the digital image data by separating at least the least significant bit from the value of the data in the respective regions in which a prediction of the data value is to be made, and from the adjacent regions on which the predictions are to be based prior to the prediction being made, and the separated least significant bits are stored in association with the corresponding compressed median difference values of the respective regions. Preferably, the data values remaining of the respective regions from which one or more least significant bits have been separated is divided by $2^n$ where n is equal to the number of least significant bits separated.

Preferably, at least some of the digital image data is scanned prior to the separation of noise for determining the number of least significant bits to be separated.

In a further aspect of the invention, the digital image data is modified prior to computing the predicted data values for reducing the numerical difference between the data values occurring in the digital image data, the digital image data being modified by arranging all the determined actual data values occurring in the image data in the form of a series of actual data values in ascending order of data values, assigning each actual data value occurring in the image a modified data value so that the numerical difference between adjacent modified data values is less than the numerical difference between the respective adjacent actual data values in the series, the modified data values forming the data values on which the predictions are based. Preferably, the modified data values are assigned so that the difference between modified data values which correspond to adjacent data values in the series of data values is unity. Advantageously, the modified data values and the actual data values are cross-referenced in a look-up table. Ideally, an inverse look-up table based on the modified and the actual data values is prepared for use in subsequent reconstruction of the image.

Preferably, each look-up table is stored with the stored compressed median difference values.

In one aspect of the invention, a histogram of the actual data values occurring in the digital image data is formed for preparing each look-up table.

In one aspect of the invention, the data value of each region defines a value of greyscale between and including black and white.

In another aspect of the invention, the data value of each region defines a value of intensity of a colour in a colour image.

Ideally, the compressed data values of the digital image are stored in a predetermined format for retrieval thereof for subsequent decompression.

Ideally, each region defines a pixel. In one aspect of the invention, the digital image is in raster format.

In another aspect of the invention, the method is carried out on an acquired image after the image has been acquired.

In a further aspect of the invention, the method is carried out on an acquired image while the image is being acquired "on-the-fly".

In a still further aspect of the invention, the method is carried out on the acquired image with intermediate storage or in parallel with intermediate storage.

The image in compressed form is suitable for storing and/or transmission.

In another aspect of the invention, the method is used for compressing a three dimensional image, and one of the axes of the three dimensional image is time, the time axis forming a row or column of the matrix, and that row or column forming the row or column as the case may be in which a region or regions are located which form a basis for predicting a data value of a region.

In another aspect of the invention, the method further comprises the step of decompressing the compressed digital image data, the decompression method comprising the steps in reverse order to the order of the steps of the compression method.

Additionally, the invention provides apparatus for compressing digital image data, the apparatus comprising

a means for sequentially scanning a plurality of regions of the image data for determining the actual values of the image data in respective regions, a means for making at least three predictions of the value of image data in each of at least some of the regions based on the determined actual values of some of the already scanned regions, which are adjacent to the region for which the image data is being predicted, a means for comparing each of the at least three predicted values of image data with the actual value of image data of the corresponding region for each region for which a prediction is made, a means for computing the values of the differences between the respective predicted values of image data and the actual value of image data for each region for which a prediction is made, a means for selecting the median difference value for each region for which a prediction is made, and a means for compressing the respective median difference values,

wherein
the means for making the at least three predictions comprises:

a means for making a first one of the at least three predictions of image data values which is based on the actual image data value of a first region adjacent to the region for which the prediction is being made, the first region lying in a row in which the region for which the prediction is being made lies, a means for making a second one of the at least three predictions of image data values which is based on the actual image data value of a second region adjacent to the region for which the prediction is being made, the second region lying in a column in which the region for which the prediction is being made lies, and a means for making a third one of the at least three predictions of image data values which is based on the gradients of actual image data values from a third region to the first region and from the third region to the second region, the third region being located adjacent to the first and second regions and adjacent to the region for which the prediction is being made and lying in the row in which the second region lies, and lying in the column in which the first region lies.

The invention will be more clearly understood from the following description of an embodiment thereof which is given by way of example only, with reference to the accompanying drawings, in which:

Fig. 1 is a diagrammatic representation of a digital X-ray image to which a method for compressing digital image data according to the invention is to be applied,

Fig. 2 is a flowchart of the method according to the invention for compressing the digital image data,

Fig. 3 is a flowchart of a method also according to the invention for decompressing the compressed digital image data,

Fig. 4 is portion of a histogram showing the frequency of the occurrence of greyscale values in the image of Fig. 1 which has been contrast stretched,

Fig. 5(a) is a numerical representation of the histogram of Fig. 4,

Fig. 5(b) is a look-up table for modifying the image from which the histogram of Fig. 4 has been prepared so that the differences between greyscale values occurring in the image is unity,

Fig. 5(c) is an inverse look-up table, which is the inverse of the look-up table of Fig. 5(b) for use in restoring the image during decompression,

Fig. 6(a) is an enlarged view of a portion of the image of Fig. 1 showing greyscale values of some of the pixels,

Fig. 6(b) shows the value of the least significant noise bits which have been separated from the pixels of Fig. 6(a),

Fig. 6(c) shows the remaining data value of the pixels of Fig. 6(a) after the least significant noise bits have been separated from the pixels,

Figs. 7(a) to (c) show algorithms according to the method of the invention for making three predictions of greyscale value of each of the pixels of the image of Fig. 1,

Fig. 7(d) illustrates diagrammatically how the three methods of prediction of Figs. 7(a) to 7(c) are used in determining a median difference value for each pixel,

Figs. 7(e) and (f) show algorithms and illustrate diagrammatically alternative prediction methods also according to the invention which include five predictions of greyscale value of each pixel for enabling a median difference value to be selected,

Figs. 8(a) to (d) illustrate mathematically how median difference values are selected for ten pixels in the digital image of Fig. 1,

Fig. 9 illustrates a look-up table for encoding median difference values,

Fig. 10 is a distribution graph illustrating the distribution of the median difference values of the image of Fig. 1,

Fig. 11 shows the values of some of the pixels of Fig. 6 after the image of Fig. 1 has been modified to reduce the differences between greyscale values occurring in the image to unity, the value of the noise bits separated from the modified values of the pixels, and the encoded median difference values of the pixels,

Fig. 12 illustrates a bit packed binary string of the pixels of Fig. 11,

Figs. 13 and 14 illustrate a computer programme in pseudo-code according to the invention for compression of the image of Fig. 1, and

Fig. 15 illustrates a flow diagram of the computer programme of Figs. 13 and 14 for compression of the image of Fig. 1.

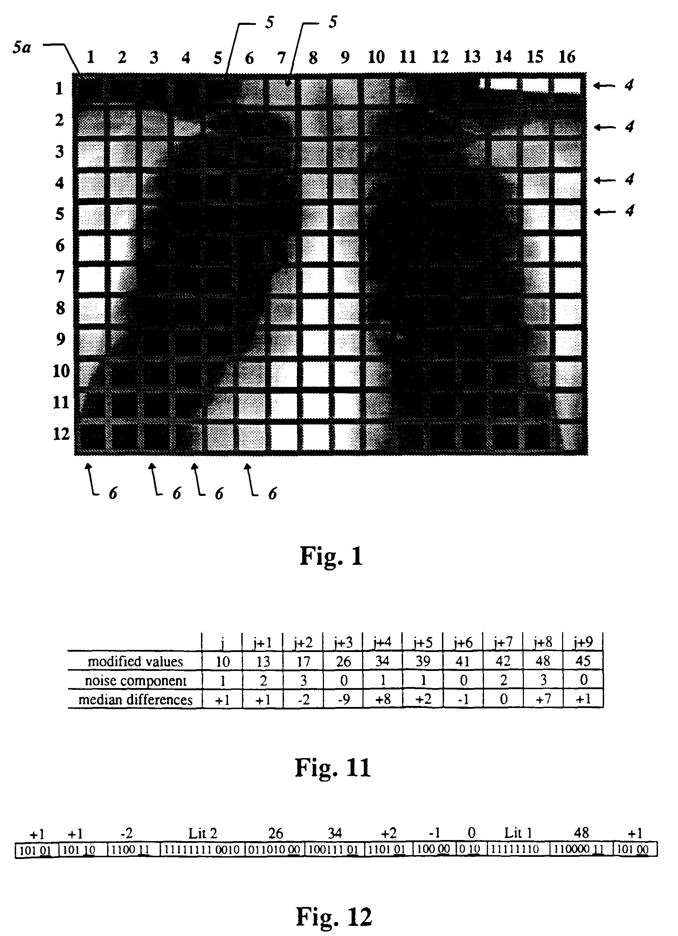

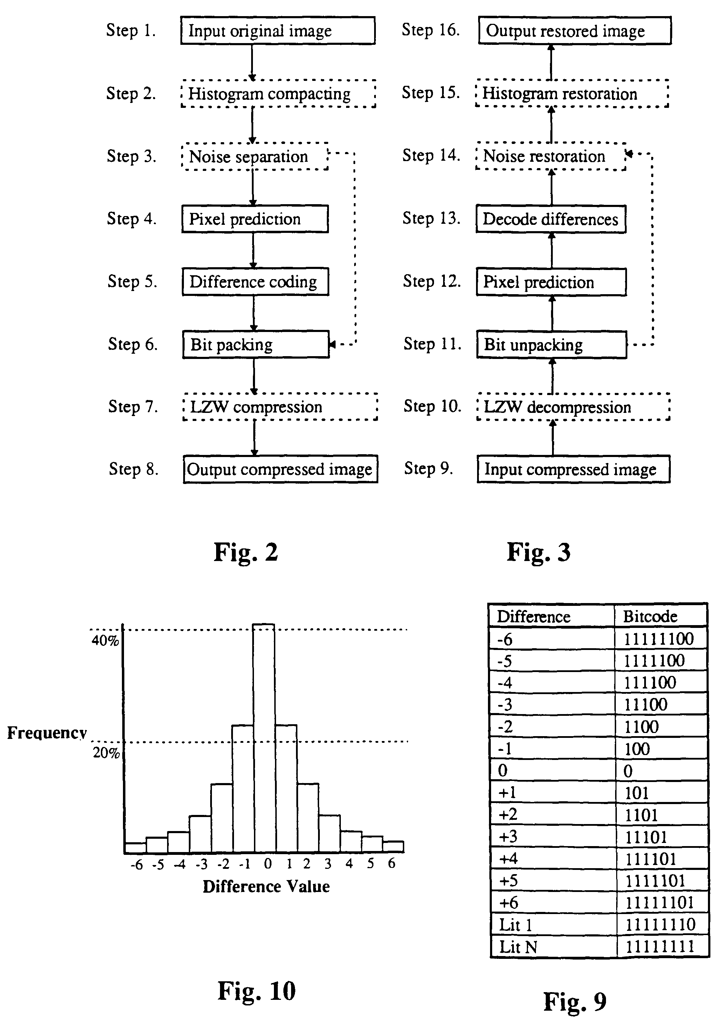

Referring to the drawings, a method for compressing digital image data, typically, a digital image of an X-ray 1 will now be described. The digital X-ray image is acquired in raster format, see Fig. 1, having a plurality of rows 4 of regions, which in this case are pixels 5 which are formed in a matrix of the rows 4 and columns 6. Each pixel 5 defines the level of greyscale at the location of the image corresponding to the pixel by an eight bit binary code. Although for convenience of illustration, the image 1 is illustrated in Fig. 1 as having twelve rows 4 and sixteen columns 6 of pixels 5, it will be appreciated by those skilled in the art that, in general, such an image would have a significantly larger number of pixels 5 per row and per column. In general, the number of pixels per row and column can vary from 64 pixels per row by 64 pixels per column to 5,000 pixels per row by 4,000 pixels per column. The method according to the invention is suitable for dealing with an image with any number of pixels per row and per column. Additionally, while in the embodiment of the invention described with reference to the drawings, the level of greyscale of each pixel is defined by an eight bit binary code, it will be appreciated that the level of greyscale may be defined by smaller or larger bit codes, indeed, in general, in X-ray imagery the greyscale level per pixel is defined by ten or twelve bit binary codes. The method according to the invention may be used for compressing any digital image irrespective of the size of the bit code for defining greyscale values.
The method according to the invention for compressing the digital image comprises the following steps which are set out in the flowchart of Fig. 2. In Step 1, the original X-ray image is acquired and scanned for determining the actual greyscale value of each pixel. Step 2 then checks if there are gaps in greyscale values occurring in the acquired image. In other words, Step 2 checks if greyscale values are missing from the acquired image. If so, Step 2 modifies the acquired image for reducing the numerical differences between greyscale values occurring in the image to unity. Step 2 is only carried out where there are gaps in greyscale values occurring in the acquired image. Such gaps in greyscale values could have been caused if the image had already been modified, for example, by contrast stretching. In such cases, many values of greyscale would be missing from the image, and such gaps in the greyscale values would prevent subsequent steps of the method being carried out effectively, as will be described below.

Step 3 checks for noise in the acquired image. If noise is present, the noise is separated from each pixel, and this is achieved by separating the least significant bit or bits from the greyscale values of the pixels. The separated noise bits are stored uncompressed as will be described below in association with the compressed data so that they can be replaced during decompression of the image.

In Step 4 the greyscale value of each pixel is predicted, the prediction being based on the determined actual greyscale values of its adjacent pixels as will be described in detail below. In this embodiment of the invention, three predictions of greyscale values are made for each pixel. The three predicted greyscale values of each pixel are then compared with the actual value of the pixel and the values of the differences between the predicted values and the actual value are computed. The median difference value of the three difference values is selected.

In Step 5 the median difference values for the pixels are coded using variable length codes as will be described below.

In Step 6, the coded median difference values for the pixels are packed, and the separated noise bits, if noise bits were originally separated, are also packed associated with the coded median difference values for the corresponding pixels.

In Step 7, further compression of the packed bits may be carried out using any suitable known lossless data compression method, such as LZW. Such general lossless data compression methods will be well known to those skilled in the art. The compressed image is then outputted to storage or transmitted as desired.

Fig. 3 illustrates a flowchart for decompression of the compressed image which comprises Steps 9 to 16, which as can be seen are effectively the reverse of Steps 1 to 8 of the compression flowchart of Fig. 2. The flowchart of Fig. 3 will be briefly described below.

For convenience, each of the Steps 1 to 8 will be described separately below under separate headings.

ings.

<u>Input original image</u>

As the original digital image of the X-ray is being acquired, it is scanned. Because each pixel defines the level of greyscale which the pixel represents in eight bit binary form, 256 levels of greyscale are available, and because the image is an X-ray image, in general, all 256 levels of greyscale will be present in the image if the image has not been altered, for example, by contrast stretching or the like. On being scanned, should it be determined that all or substantially all levels of greyscale are to be found in the image, Step 2, namely, the modification of the image for reducing the numerical differences between greyscale values to unity is not required, and is omitted. However, where large gaps occur in the greyscale values found in the image, the method of Step 2 is applied to the image as will now be described.

<u>Modification of the image to reduce greyscale gaps</u>

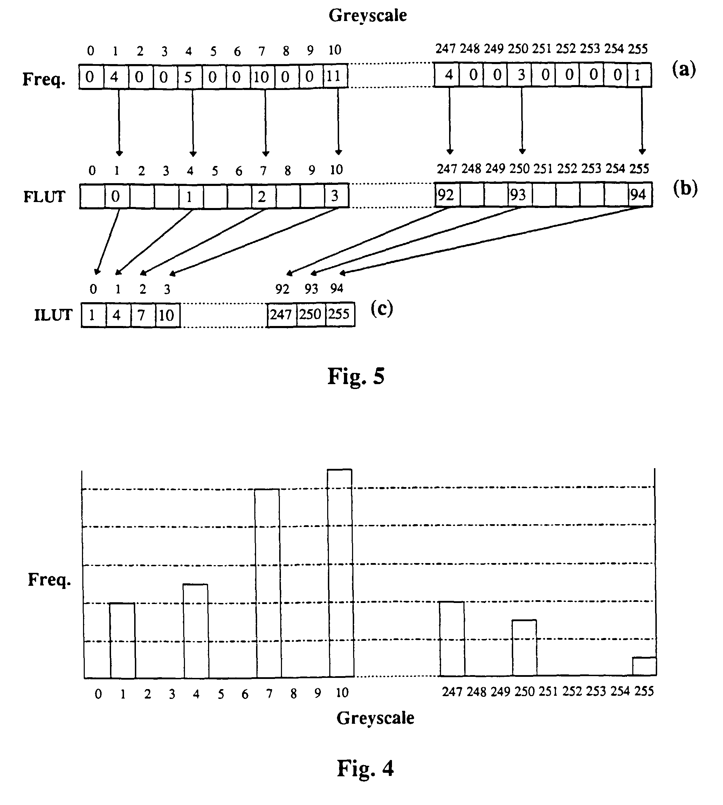

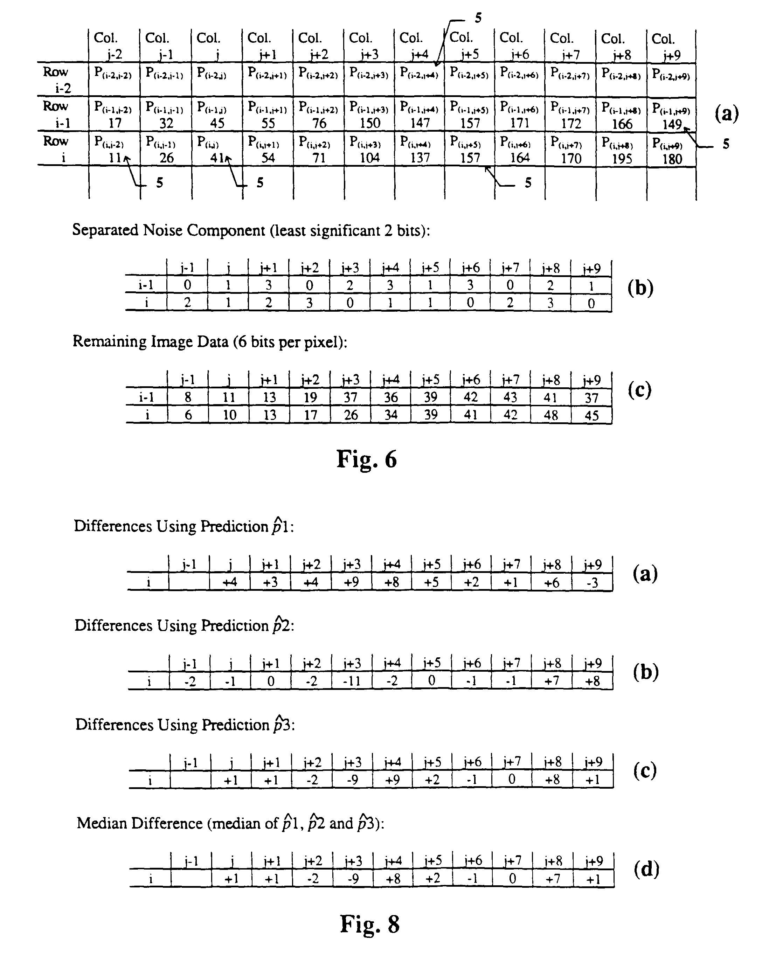

Referring now to Figs. 4 and 5, Step 2 for reducing the numerical differences between the greyscale values occurring in the image will now be described. A histogram of the frequency of greyscale values occurring in the image is constructed. A typical histogram is illustrated graphically in Fig. 4, however, in practice the method will be carried out by a computer programme and the histogram will be prepared in the form of Fig. 5 (a). As can be seen from Figs. 4 and 5, none of the pixels in the image contain a greyscale value of 0. Four of the pixels contain a greyscale value of 1. There are no pixels with greyscale values of 2 and 3, and there are five pixels of greyscale value of 4. No pixels have a greyscale value of 5 and 6, but ten pixels have a greyscale value of 7. None of the pixels have a greyscale value of 8 or 9 and eleven have a greyscale value of 10. For convenience, the entire image will not be considered here, however, towards the top end of greyscale values, four pixels have a greyscale value of 247, none have greyscale values of 248 and 249, and three have a greyscale value of 250, while none have greyscale values of 251 to 254. One pixel has a greyscale value of 255. In Fig. 5(a) the greyscale values are shown above the boxes and the frequency of occurrence of the greyscale values are shown by the numbers in the boxes. In order to reduce the differences between the greyscale values occurring in the image to unity, the look-up table of Fig. 5(b) is prepared. The greyscale value of 1 is assigned the greyscale value of 0 for the reduced modified image. The greyscale value of 4 is assigned the greyscale value of 1 for the reduced modified image, the greyscale value of 7 is assigned the value 2 for the reduced modified image, the greyscale value of 10 is assigned the greyscale value of 3 for the reduced modified image, and so on up to the greyscale value of 247 which is assigned the value of 92 for the reduced modified image, and so on up to the greyscale value of 255, which is assigned the value of 94 for the reduced modified image. The greyscale values of 4 to 91 are also all used in the reduced modified image. Accordingly, in the reduced modified image to which the remaining steps of the method will be applied, the differences between the greyscale values occurring in the image is unity. Fig. 5(c) illustrates an inverse look-up table for reproducing the original image during decompression as will briefly be described below.

In preparing of the modified image the greyscale values of the pixels from 0 to 94 are assigned to the pixels of the acquired image in accordance with the look-up table of Fig. 5(b). The reduced modified image is then subjected to Step 3, as will now be described.

Noise separation

In Step 3, the acquired image, or if the image has been subjected to Step 2 the reduced modified image is scanned to ascertain the level of noise. Any suitable method may be used, for example, the number of noise planes may be calculated using bit plane entropy statistics, which will be known to those skilled in the art. This will determine the number of least significant bits to be separated from each pixel to reduce noise to an optimum level. This method will also determine if there is insufficient noise to justify separation, and if so, the image is passed to Step 4. Where noise is present, typically, one to three least significant bits will be separated. In this embodiment of the invention, the two least significant bits are separated from the value of each pixel and stored. Each pixel is then divided by four, namely, $2^n$ where n is the number of least significant bits which have been separated, namely, in this case, two. This maintains the difference between the greyscale values occurring in the image or the reduced modified image at unity. The two least significant bits which have been separated from each pixel are stored in pixel order for subsequent bit packing which will be described below. After the step of noise reduction, the digital image is then subjected to Step 4.

Prediction of greyscale value

Referring now to Figs. 6 to 8, Step 4, the step of predicting the greyscale value in each pixel of the image will now be described. The image which is subjected to Step 4 may be the acquired image if the image has not been subjected to modification under Step 2 and noise separation under Step 3. Alternatively, the image which is subject to Step 4 may be a modified image which may or may not have been subjected to noise separation, or the acquired image which may or may not have been subjected to noise separation. In this embodiment of the invention, the image has been modified and also subjected to noise separation.

Referring initially to Fig. Fig. 6(a) illustrates a portion of the matrix of pixels 5, and pixel values are shown in some of the pixels 5. These are the actual pixel values of the acquired image as it was acquired. Fig. 6 (b) shows the modified values of the pixels from pixel $P_{[i-1,j-1]}$ to pixel $P_{[i,j+9]}$ after the image had been modified under Step 2. Fig. 6(c) shows pixel values for the same pixels as in Fig. 6(b) after the image has been subjected to Step 3, namely noise reduction. It is the pixel values of Fig. 6(c) which are the actual values of the pixels which are used as a basis for making the three predicted values of the respective pixels.

For the purpose of describing the method, the greyscale value of pixel $P_{[i,j]}$ will be described. The pixel value of pixel $P_{[i,j]}$ is predicted based on the actual values of the following pixels:

$$P_{[i,j-1]}, \ P_{[i-1,j]} \ \text{and} \ P_{[i-1,j-1]}$$

The three predictions of the value of pixel $P_{[i,j]}$ are made and the differences between each predicted value and the actual value of the pixel $P_{[i,j]}$ from Fig. 6 (c) are computed.

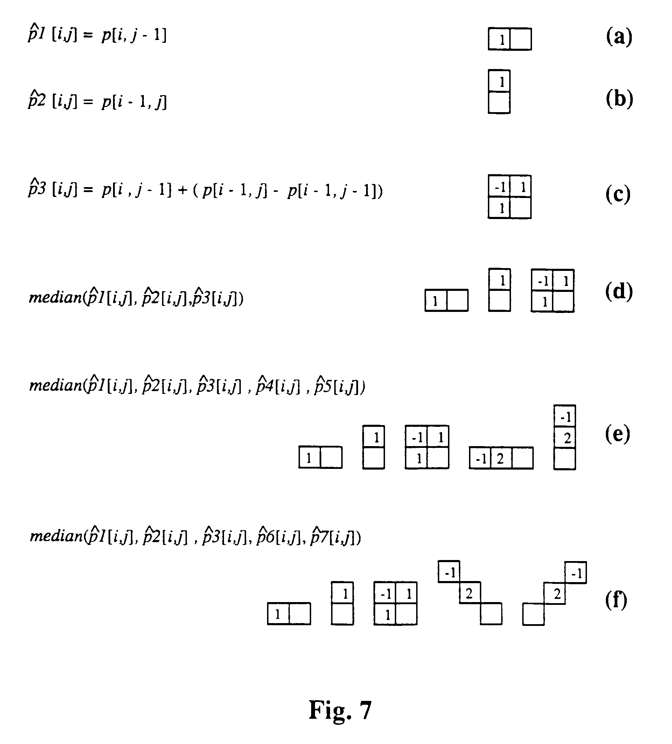

A first prediction of the value of the pixel $P_{[i,j]}$ is made based on the actual value shown in Fig. 6(c) of the pixel $P_{[i,j-1]}$ where the first predicted value of $P_{[i,j]}$ is

$$\hat{P}1_{[i,j]} = P_{[i,j-1]},$$

see Fig. 7(a).

Since the value of the pixel $P_{[i,j-1]}$ is equal to 6, the first predicted value

$$\hat{P}1_{[i,j]} = 6.$$

A second prediction of the value of the pixel $P_{[i,j]}$ is based on the value shown in Fig. 6(c) of the pixel $P_{[i-1,j]}$ and is determined by the formula

$$\hat{P}2_{[i,j]} = P_{[i-1,j]},$$

see Fig. 7(b).

Since the value of the pixel $P_{[i-1,j]}$ is 11, the second predicted value

$$\hat{P}2_{[i,j]} = 11.$$

A third prediction of the value of the pixel $P_{[i,j]}$ is made based on the values shown in Fig. 6(c) of the pixels $P_{[i,j-1]}$, $P_{[i-1,j]}$ and the gradient of the pixel values in rows i-1 between the pixels $P_{[i-1,j-1]}$ and $P_{[i-1,j]}$, and the gradient of the pixel values in column j-1 between the pixels $P_{[i-1,j-1]}$ and $P_{[i,j-1]}$. This is obtained from the for-

mula

$$\hat{P3}_{[i,j]} = p_{[i,j-1]} + (p_{[i-1,j]} - p_{[i-1,j-1]}),$$

see Fig. 7(c), where $\hat{P3}_{[i,j]}$ is the third predicted value.

The value of the pixel $P_{[i-1,j-1]}$ is 8 and since the values of the pixels $P_{[i,j-1]}$ and $P_{[i-1,j]}$ are 6 and 11, respectively, the third predicted value $\hat{P3}_{[i,j]}$ from the formula of Fig. 7(c) is 9.

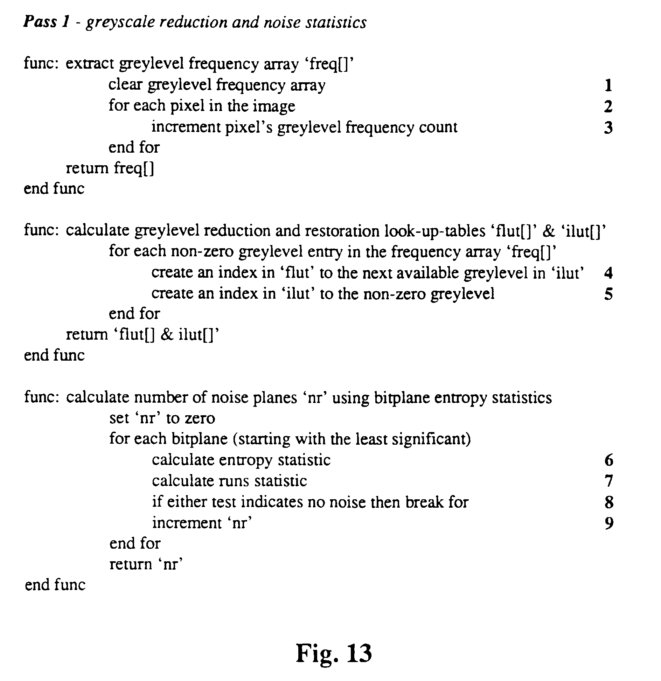

The three predicted values $\hat{P1}_{[i,j]}$, $\hat{P2}_{[i,j]}$ and $\hat{P3}_{[i,j]}$ and the actual value of the pixel $P_{[i,j]}$ are compared and the respective differences values between the predicted values and the actual value are computed. The difference values between the three predicted values and the actual value of pixel $P_{[i,j]}$ are shown in Figs. 8 (a) to (c). The difference value between the first predicted value and the actual value is +4, the difference value between the second predicted value and the actual value is -1, and the difference value between the third predicted value and the actual value is +1. In accordance with the method of the invention, the median difference value is selected, which in this case is +1, see Fig. 8(d). The median difference value is then coded as will be described below in accordance with Step 5. Also in Figs. 8(a), (b) and (c), the difference values between the first, second and third predicted values P1, P2 and P3, and the actual values of the pixels $P_{[i,j+1]}$ to $P_{[i,j+9]}$ are also shown. The median difference values for the pixels $P_{[i,j+1]}$ to $P_{[i,j+9]}$ are shown in Fig. 8(d). The first, second and third predicted values, P1, P2 and P3, respectively, are determined in the same manner as described above for determining the first, second and third predicted values $\hat{P1}_{[i,j]}$, $\hat{P2}_{[i,j]}$ and $\hat{P3}_{[i,j]}$, respectively, and the respective difference values and the median values are likewise computed in similar fashion as the difference values and median difference value for the pixel $P_{[i,j]}$.

After each median difference value has been computed, the median difference value is encoded in accordance with Step 5 which will now be described.

Difference coding

Referring now to Figs. 9 and 10, the bit codes which are of variable length for coding the median difference values are illustrated in the look-up table of Fig. 9. The median difference value of 0 is the most frequently occurring median difference value, and thus the shortest bit code, namely, the one bit code "0" is assigned to this. The median difference values of ±1 are the next most frequently occurring median difference values and the next shortest bit codes which are three bit codes are assigned to these, and so on up to the median difference values of ±6, to which eight bit codes are assigned. Fig. 10 illustrates the distribution of the median difference values for the X-ray image of Fig. 1. Each code of Fig. 9 is a unique code, and when read from the right-hand side to the left-hand side can be instantly identified as being a bit code for coding the median difference values, the significance of this is that there is no need to indicate the beginning and end of the bit codes for the median difference values when the bit codes are being bit packed as will be described below in relation to Step 6.

As discussed above, the bit codes for the difference values -6 and +6 are eight bit codes. Since the value of each pixel is provided in an eight bit code, there is no advantage in coding difference values over -6 or +6, since the bit code would be longer than the actual bit code of the pixel. In such cases, where the median difference value exceeds +6 or -6, the actual value of the pixel is stored and bit packed, see Step 6 below. A first flag means is provided for flagging when an actual value of a pixel is being bit packed, and in this case, the first flag means is an eight bit code which is shown in the look-up table of Fig. 9 against the abbreviation "Lit 1". The actual value referred to here is the value of the pixel after modification of the image under Step 2 and noise reduction under Step 3. Where a run of pixels is encountered where the median difference values in each case exceeds ±6, the actual values of the pixels in the run are bit packed. A second flag means for indicating that a run of actual values of pixels is being bit packed is provided by an eight bit code which is shown in the look-up table of Fig. 9 against the abbreviation "Lit N". After the eight bit code of the second flag the number of pixels in the run is provided in a four bit code, and then the eight bit values of the respective pixels in the run are bit packed, as will be described below. After the median difference value of each pixel has been coded or its actual value retained, the coded value or actual value is bit packed in a bit string in accordance with Step 6 which will now be described.

Bit packing

The bit packing of the coded median difference values, the actual values of the pixels where appropriate and the separated least significant noise bits will now be described with reference to Figs. 11 and 12. Fig. 11 illustrates the median difference values for the string of pixels $P_{[i,j]}$ to $P_{[i,j+9]}$. The median difference values of three of the pixels exceeded ±6, and thus the actual values of those pixels are retained. Fig. 11 also shows the actual modified values of the pixels $P_{[i,j]}$ to $P_{[i,j+9]}$, as well as the values of the noise components, namely, the values of the two least significant noise bits separated from the pixels $P_{[i,j]}$ to $P_{[i,j+9]}$. Fig. 12 shows the bits of pixels $P_{[i,j]}$ to $P_{[i,j+9]}$ bit packed into a string of bits. The median difference value of pixel $P_{[i,j]}$ is +1, and the difference value code from the look-up table of Fig. 9 is 101. The noise bits which had been separated from the pixel value are combined with the difference value code and included in the string. In this case, the noise bits which had been separated under Step 3 are the bits 01. For convenience and for ease of understanding Fig. 12, the least significant bits which have been included along with the median difference value codes and actual values are underlined. The bits for each pixel of Fig. 12 are combined and illustrated in boxes. The value of the median difference value code or the actual value of the pixel which is bit packed for each of the pixels is shown above the relevant box. The median difference value of pixel $P_{[i,j+1]}$ is also +1, and thus the median difference value code is 101. The separated noise bits of 10 are combined with the median difference value code 101. In the case of pixel $P_{[i,j+2]}$ the median difference value is -2, and thus the median difference value code is 1100. The two least significant noise bits 11 which had been separated from pixel $P_{[i,j+2]}$ are combined with the median difference value code. The median difference values of pixels $P_{[i,j+3]}$ and $P_{[i,j+4]}$ being greater than ±6, the actual values of 26 and 34, respectively, of these two pixels are included in the bit string. However, to indicate that the actual values of the two pixels $P_{[i,j+3]}$ and $P_{[i,j+4]}$ are being included in the bit string, the second flag "Lit 2" is included in the bit string preceding the actual values of these two pixels, and the second flag "Lit 2" is followed by the four bit code indicating that the next two values following the second flag "Lit 2" are actual values. Since no noise bits were separated from the pixel $P_{[i,j+3]}$, the two bits 00 are combined with the actual value of the pixel $P_{[i,j+3]}$. The noise bits which were separated from the pixel $P_{[i,j+4]}$ of 01 are combined with the actual value of the pixel in the bit string. The median difference value code is bit packed for the pixels $P_{[i,j+6]}$ and $P_{[i,j+7]}$. Since the median difference value of the pixel $P_{[i,j+8]}$ exceeds ±6, the actual value is bit packed along with the noise bits which had been separated. In the case of the pixel $P_{[i,j+9]}$ the median difference value code is bit packed along with the noise bits which had been separated.

After bit packing, the compression of the image according to the invention has been completed. The compressed bit packed image may then be subjected to further well-known compression techniques, for example, LZW compression if desired. The bit packed image or the compressed bit packed image is then outputted along with relevant header information which is required for decompression, and the compressed bit packed image and the header information may be stored or transmitted. The header information contains details of the image width, the height and the number of bits per pixel, in other words, the number of bits used for giving the greyscale value of each pixel in the originally acquired image. The header information also includes an indication as to whether or not the image was modified to reduce the gaps between the greyscale values occurring in the original image, and if so, the header information also includes the inverse look-up table. The header information includes the number of least significant bits which were separated in the compression method for optimising noise reduction. The header information also includes the algorithms used for predicting the levels of greyscale of each pixel.

Turning now to Fig. 3, the steps of decompression will briefly be described. Under Step 9, the compressed image from Step 8 is acquired. Step 10 decompresses the bit packed image if the bit packed image had been subjected to LZW compression or other well-known compression, using the appropriate decompression algorithm. Step 10 is omitted if the image acquired by Step 9 had not been subjected to Step 7. Step 11 then unpacks the bits and separates the least significant bits from the coded median difference values or the actual values of the pixels as the case may be. The image from Step 11 is then subjected to Step 12 which using similar algorithms to those described with reference to Step 4 predicts the values of the pixels and determines the median difference values. In Step 13, the median difference values are then decoded using the table of Fig. 9 in reverse, and the image is subjected to Step 14 which returns the noise to the pixel values determined from Step 13. If the image was subjected to reduction modification of Step 2, the image is subjected to Step 15 which by the use of the inverse look-up table of Fig. 5(c) reverses Step 2 of the compression method, and then Step 16 outputs a restored image which is identical to the original image acquired in Step 1.

Returning now to Figs. 7(e) and 7(f) two alternative prediction methods for predicting the value of pixel $P_{[i,j]}$ are illustrated. In each of these prediction methods, two further additional predictions of the pixel values of pixel $P_{[i,j]}$ are carried out as well as the first three predictions, $\hat{P}1_{[i,j]}$, $P2_{[i,j]}$ and $P3_{[i,j]}$ already described. In the case of the method of Fig. 7(e), a fourth prediction $P4_{[i,j]}$ of the pixel value of pixel $P_{[i,j]}$ is carried out based on the previous two pixels in the row i, namely, pixel $P[i,j-1]$ and pixel $P_{[i,j-2]}$ from the formula

$$\hat{P}4_{[i,j]} = 2 \times P_{[i,j-1]} - P_{[i,j-2]}$$

Since the pixel $P_{[i,j-1]}$ is closer to the pixel $P_{[i,j]}$ than is the pixel $P_{[i,j-2]}$, this latter pixel $P_{[i,j-2]}$ is weighted with a weighting of 2. Pixel $P_{[i,j-2]}$ gives the gradient of the pixel values between the pixel $P_{[i,j-2]}$ and the pixel $P_{[i,j-1]}$. The fifth prediction $P5_{[i,j]}$ is carried out based on the two adjacent pixels in the column j, namely, pixels $P_{[i-1,j]}$ and pixel $P_{[i-2,j]}$ in similar fashion from the formula

$$\hat{P}5_{[i,j]} = 2 \times P_{[i-1,j]} - P_{[i-2,j]}$$

The pixel $P_{[i-1,j]}$ being closest to the pixel $P_{[i,j]}$ is given a weighting of 2, while the pixel $P_{[i-2,j]}$ gives the gradient.

In this embodiment of the invention, the difference values between the five predicted values, $P1_{[i,j]}$, $P2_{[i,j]}$, $P3_{[i,j]}$, $P4_{[i,j]}$ and $P5_{[i,j]}$ and the actual value of the pixel $P_{[i,j]}$ are computed and the median difference value of the five difference values is selected.

In the case of Fig. 7(f), the fourth and fifth predictions which for convenience are referred to as $P6_{[i,j]}$

and $\hat{P7}_{[i,j]}$ are based on pixels which are diagonally aligned with the pixel $P_{[i,j]}$ from the formulae

$$\hat{P6}_{[i,j]} = 2 \times P_{[i-1,j-1]} - P_{[i-2,j-2]},$$

and

$$\hat{P7}_{[i,j]} = 2 \times P_{[i-1,j+1]} - P_{[i-2,j+2]}.$$

The closest pixels to the pixel $P_{[i,j]}$ of the diagonally aligned pixels, namely, pixels $P_{[i-1,j-1]}$ and $P_{[i-1,j+1]}$ are respectively weighted with a value of 2. The pixels $P_{[i-2,j-2]}$ and $P_{[i-2,j+2]}$ give the gradient of the pixel values between the pixels $P_{[i-2,j-2]}$ and $P_{[i-1,j-1)]}$, and $P_{[i-2,j+2]}$ and $P_{[i-1,j+1]}$, respectively. In this case, the difference values between the five predicted values $P1_{[i,j]}$, $P2_{[i,j]}$, $P3_{[i,j]}$, $P6_{[i,j]}$ and $P7[i,j]$ and the actual value of the pixel $P_{[i,j]}$ are computed and the median difference value of the five difference values is selected.

By using five predictions as opposed to three, the median difference values, in general, will be closer to zero.

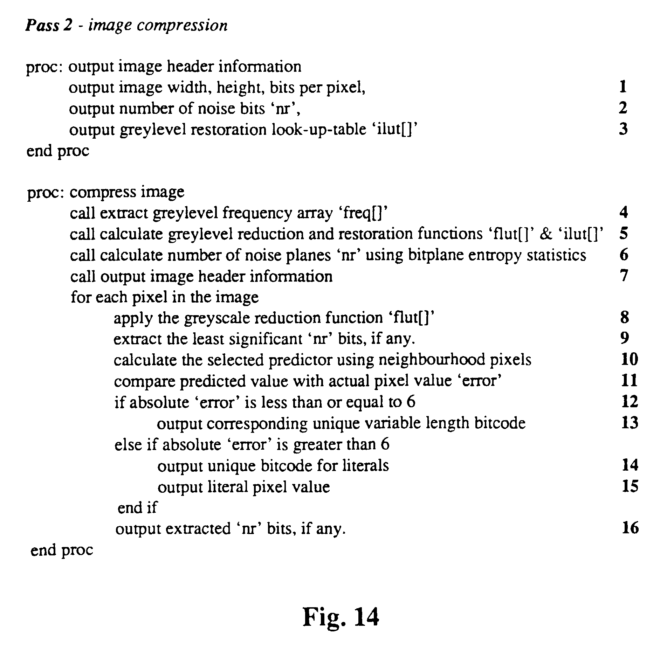

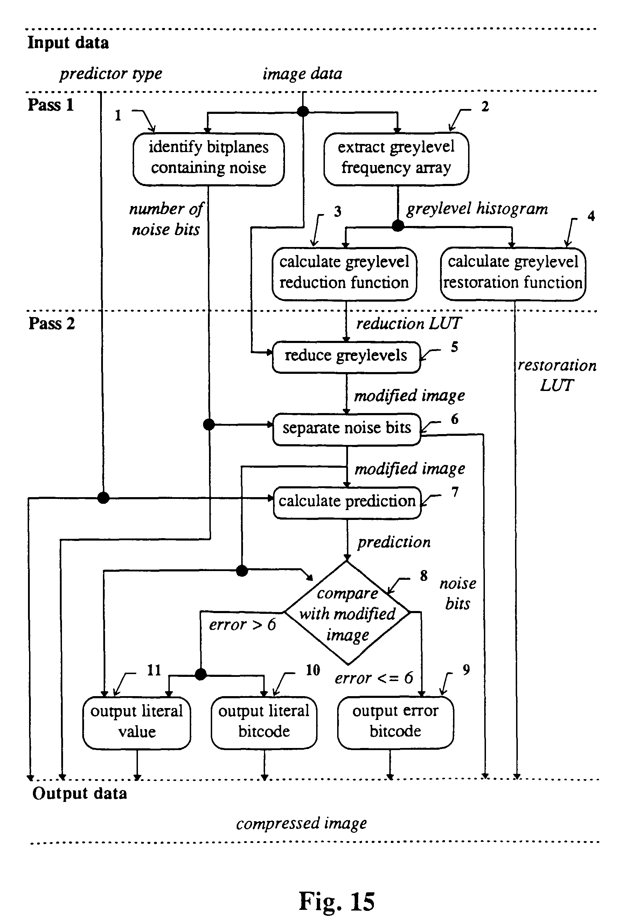

The method according to the invention may be implemented in hardware or software, typically, it will be implemented in software on a computer, however, it may be implemented in an integrated circuit chip. A typical computer programme in pseudo-code is set out in Figs. 13 and 14, and a flow diagram of the computer programme is illustrated in Fig. 15. The computer programme will now be briefly described, however, it will be readily apparent to those skilled in the art that many other suitable programmes for implementing the method may be used without departing from the scope of the invention. The computer programme of Figs. 13 and 14 makes two passes over the digital image. The first pass will be described with reference to Fig. 13, and the second pass will be described with reference to Fig. 14. The first pass comprises three functions. The first function is to prepare the greyscale values frequency array from the digital image. The second function is to calculate the greyscale value reduction and restoration look-up tables, in other words, the forward look-up table of Fig. 5(b) for preparing a reduced modified digital image and the inverse look-up table of Fig. 5(c) for restoring the modified reduced image to its original form after decompression. The third function determines the number of least significant bits to be separated from the greyscale value of each pixel for optimising noise reduction.

Line 1 of the programme clears the grey level frequency arrays. Lines 2 and 3 on scanning of the image prepares the frequency array of Fig. 5(a) by incrementing the greyscale value frequency count of each greyscale value as a pixel of that greyscale value is located in the image. Lines 4 and 5 create the forward looking look-up table of Fig. 5(b) and the inverse look-up table of Fig. 5(c). Lines 6, 7, 8 and 9 calculate for each bit plane starting with the least significant bit plane the entropy statistic and the run statistic. If either test indicates noise then the function breaks and increments the noise plane NR by one. Determination of the number of least significant bits to be separated using bit plane entropy statistics will be well known to those skilled in the art.

The second pass of the computer programme will now be described with reference to Fig. 14. Pass 2 comprises two programme functions. The first function outputs image header information for use in decompression, and the second function compresses the data in accordance with the method. Lines 1, 2 and 3 of the first function of the second pass forms the image header which includes the image width, height and bits per pixel. The header also includes the number of least significant bits separated for optimising noise reduction and the inverse look-up table for restoring the greyscale level of the compressed image to form the original image after decompression. This header information as well as other header information discussed above is outputted with the compressed image. The second programme function which compresses the image commences with Line 4 which calls Function 1 of the first pass to prepare the greyscale frequency array of Fig. 5(a). Line 5 of the second programme function of the second pass calls the second function of the first pass for calculating the forward look-up table and the inverse look-up table of Figs. 5(b) and (c). Line 6 of the second programme function of the second pass calls the third function of the first pass, namely, the function which calculates the number of least significant bits to be separated. Line 7 of the second pass calls the output image header information. The second pass then moves on to Line 8, and for each pixel in the image, Line 8 applies the greyscale level reduction look-up table of Fig. 5(b) for preparing a modified image with numerical differences between the greyscale values occurring in the image reduced to unity. Line 9 of the second pass separates the appropriate number of least significant bits from the bit value of each pixel and then divides the remaining bit value of the pixel by $2^n$ where n equals the number of least significant bits separated for noise reduction. Line 10 of the second pass makes the relevant number of predictions of the value of each pixel and Line 11 compares the predicted values with the actual value of the pixel and computes the difference values between the respective predicted values and the actual value. Line 11 also selects the median difference value from the difference values of each pixel. Line 12 checks if the absolute median difference value is less than or equal to 6, and if so, Line 13 selects the appropriate variable length bit code corresponding to the median difference value from the look-up table of Fig. 9 and outputs the appropriate variable length bit code for the pixel. If it is determined that the absolute value of the median difference value is greater than 6 then Line 14 selects the appropriate code, namely, "Lit 1" or "Lit N" which is outputted and Line 15 outputs the actual pixel value after the relevant bit code "Lit 1" or "Lit N". Should a run of pixels occur where the actual value is to be outputted, the number of actual values in the run is outputted after the code for "Lit N" in a four bit code as already described. Line 16 outputs the separated least significant bits along with either the variable length bit code of each pixel or the actual value of each pixel as appropriate.

Turning now to Fig. 15 the flow diagram of the computer programme will now be briefly described. The digital image data is received and the predictor type is selected. This will normally be selected by the operator. In other words, the operator will select whether three predictions of pixel value are to be made for each pixel, five and possibly seven, and the operation will also determine the algorithms for making each prediction. The acquired digital image data is passed to block 1 which identifies the bit planes containing noise and determines the number of least significant bits to be separated, if any. The digital image data is also passed through block 2 which prepares the greyscale frequency array of the type illustrated in Fig. 5(a). The histogram of frequencies is then passed to block 3 which prepares the look-up table of the type of Fig. 5(b). The histogram of frequencies is also passed to block 4 which prepares the inverse look-up table of the type illustrated in Fig. 5(c) for restoring the image. The digital image data is also passed to block 5 which reduces the greyscale values of the image using an appropriate look-up table of the type of Fig. 5(b). The modified image resulting from block 5 is passed to block 6 where the number of least significant bits determined by block 1 are separated from the modified image. The modified image with the least significant bits having been separated is then passed to block 7 which prepares the relevant number of predictions of greyscale value for each pixel based on the selected number of predictions to be made, and compares the predicted values with the actual greyscale value of the pixel of the modified image and computes the difference values between the respective predicted values and the actual value. Block 7 then selects the median difference value of the difference values. Block 8 checks if the absolute value of the median difference value for each pixel is less than or equal to 6. If less than or equal to 6, the difference value is coded using the variable length codes of Fig. 9 by block 9. Should block 8 determine that the absolute value of the median difference value is greater than 6, the appropriate bit code "Lit 1" indicating an actual value is outputted by block 10 and the actual value of the pixel is subsequently outputted by block 11 to form a bit stream of the type of that of Fig. 12. The image may then be stored or transmitted or subjected to further known compression and then stored or transmitted.

The advantages of the invention are many. By virtue of the fact that a number of predictions of the greyscale value of each pixel are made, any noise which may occur in individual predicted values is separated by virtue of the fact that the median difference value based on the predictions is selected. By virtue of the fact that the code used for encoding the median difference values is a variable length bit code, efficient compression of data is achieved and by assigning the shortest codes to the median difference values most frequently occurring, further significant reduction of the compressed image is achieved.

Where the acquired image has already been modified by contrast stretching, reducing the numerical differences between the greyscale values occurring in the image to unity considerably improves the compression process. Since most naturally occurring images, typically, X-ray images, generally do not have sudden jumps in greyscale values between adjacent pixels, and thus if the differences between the greyscale values occurring in the image is unity, in general, the difference in greyscale values between adjacent pixels should be relatively low and commonly in the order of 0 to 6. This, thus, ensures that the median difference values between the predicted and actual values of pixels will be relatively small, and in most cases, below +1, see the distribution of difference values of Fig. 10. This further enhances the reduction which can be achieved during compression. Separation of noise from the bit values of each pixel prior to compression further adds to the efficiency of compression, since it has been found that the compression of noise gives no benefit. The use of median values of the difference values achieves two important advantages in one step. Firstly, it combines the results of several matched predictions, and these matched predictions are selected to work well in combination and each one is selected to respond to particular features in the image data. Secondly, noise in a pixel on which an individual prediction is made is reduced by ignoring values of spurious predictions. This is important since the most effective predictions are based on a small matrix of immediate neighbouring values of pixels, and such predictions may be subject to considerable noise. This matrix of neighbourhood pixels which is available for predicting the value of the pixel $P_{[i,j]}$ can clearly be seen in Fig. 6. It will be apparent to those skilled in the art that only previous values of the current row and previous rows are available for prediction if the compression and decompression is performed in a scan line order.

In general, it has been found that the method according to the invention provides relatively high compression ratios typically of the order of 4:1, with no loss of image data.

It will be appreciated by those skilled in the art that since the first pixel in the first row and in the first column, in other words, pixel $P_{[1,1]}$ will be the first pixel to be scanned, it will not be possible to make a prediction for this pixel, and thus, the actual value of the first pixel will be bit packed in the bit stream in the appropriate manner as already described. Similarly, since it is not possible to base predictions for the pixels in the first row on pixels in a previously occurring row, a lesser number of predictions will be made for the pixels $P_{[1,2]}$ onwards in the first row. In cases where three predictions are being made as described with reference to Figs. 7(a), (b), (c) and (d), in general, only the prediction of Fig. 7(a), namely, prediction P1 will be made for the pixels in the pixels from $P_{[1,2]}$ onwards for the first row. The difference values computed between the predicted values and the actual values of the relevant pixels will then be encoded. The header information stored and transmitted with the bit packed image will include the algorithm or algorithms used for making the predictions of the predicted values of the pixels in the first row of the image. It will be appreciated that where five predictions are being made of the greyscale value for each pixel using the predictions of Figs. 7(e) or (f), it will not be possible to make five predictions for the pixels in the first two rows, and accordingly, these first two rows of the image will be treated as just described.

It will be appreciated that while the compression method has been described as comprising the eight steps of Fig. 2, as already discussed where an acquired image has not been altered with resultant gaps in greyscale values, Step 2 may be omitted. Similarly, in certain cases, Step 3 may be omitted. Firstly, Step 3 may be omitted if there is little noise in the acquired image, and even where there is noise in the acquired image, in certain cases, Step 3 may be omitted. Steps 4, 5 and 6 of Fig. 2 are essential to the invention, however, it will be appreciated that any odd number of predictions of pixel values may be made once there are at least three predictions in order to provide a median difference value. It will also be appreciated that while specific bit codes have been described for coding the median difference values, other suitable bit codes may be provided, although, as discussed above, it is important that the bit codes should be of the shortest length possible, and preferably, of variable length, the codes of shortest lengths being assigned to the most frequently occurring median difference values. While bit packing is essential to the invention, other suitable bit packing methods may be used.

As discussed above, it will be appreciated that the number of bits defining the greyscale value of each pixel is irrelevant to the method of the present invention. The method for compressing digital image data according to the invention may be used irrespective of the number of bits defining the greyscale values of the pixels. Indeed, it will be appreciated that the higher the number of bits which define the greyscale values of the pixels, the more efficient will be the compression. Furthermore, where more than eight bits are used for defining greyscale values, for example, ten to twelve bits, it is envisaged that where noise does occur, more than the two least significant bits may be separated from the value of each pixel if necessary, in certain cases, it is envisaged that up to four, and possibly, five least significant bits may be separated from the pixel value.

It will also be appreciated that the order in which the steps of the method according to the invention is carried out may be altered. For example, noise separation may be carried out on the acquired image prior to modification of the image to reduce the numerical differences between the greyscale values occurring in the image.

While the method has been described for use in compressing a digital X-ray image in black and white with greyscale, it will be appreciated that the method may also be used for compressing a digital colour image where the pixels define the intensities of the respective primary colours. In such cases, the image would comprise a set of three images, one for each of the three primary colours, and the image for each colour may be compressed separately, or, alternatively, the images may be compressed simultaneously, where either the rows or columns of pixels would correspond to a row or column of pixels extending from colour image to colour image.

The invention is not limited to the embodiment hereinbefore described which may be varied in construction and detail.

## Claims

1. A method for compressing digital image data, the method comprising the steps of

> sequentially scanning a plurality of regions ($P_{[i,j]}$) of the image data and determining the actual values of the image data in respective regions ($P_{[i,j]}$),
> making at least three predictions of the value of image data for each of at least some of the regions ($P_{[i,j]}$) based on the determined actual values of the image data of some of the already scanned regions ($P_{[i,j-1]}$, $P_{[i-1,j]}$, $P_{[i-1,j-1]}$) which are adjacent to the region ($P_{[i,j]}$) for which the value of image data is being predicted,
> comparing each of the at least three predicted values of image data with the actual value of image data ($P_{[i,j]}$) of the corresponding region ($P_{[i,j]}$) for each region ($P_{[i,j]}$) for which a prediction is made,
> computing the values of the difference between the respective predicted values of image data and the actual value of image data for each region ($P_{[i,j]}$) for which a prediction is made,
> selecting the median difference value of the at least three difference values for each region ($P_{[i,j]}$) for which a prediction is made, and
> compressing the respective median difference values,

> characterised in that

a first one of the at least three predictions of image data values of each region $(P_{[i,j]})$ for which a prediction is being made is based on the actual image data value of a first region $(P_{[i,j-1]})$ adjacent to the region $(P_{[i,j]})$ for which the prediction is being made, the first region $(P_{[i,j-1]})$ lying in a row (i) in which the region $(P_{[i,j]})$ for which the prediction is being made lies,

a second one of the at least three predictions of image data values of each region $(P_{[i,j]})$ for which a prediction is being made is based on the actual image data value of a second region $(P_{[i-1,j]})$ adjacent to the region $(P_{[i,j]})$ for which the prediction is being made, the second region $(P_{[i-1,j]})$ lying in a column (j) in which the region $(P_{[i,j]})$ for which the prediction is being made lies, and

a third one of the at least three predictions of image data values of each region $(P_{[i,j]})$ for which a prediction is being made is based on the gradients of actual image data values from a third $(P_{[i-1,j-1]})$ to the first region $(P_{[i,j-1]})$ and from the third region $(P_{[i-1,j-1]})$ to the second region $(P_{[i-1,j]})$, the third region $(P_{[i-1,j-1]})$ being located adjacent to the first and second regions $(P_{[i,j-1]}, P_{[i-1,j]})$ and lying in the row (i-1) in which the second region $(P_{[i-1,j]})$ lies, and in the column (j-1) in which the first region $(P_{[i,j-1]})$ lies.

2. A method as claimed in Claim 1 characterised in that the digital image data is scanned region $(P_{[i,j]})$ by region $(P_{[i,j]})$ as a matrix array of regions $(P_{[i,j]})$.

3. A method as claimed in Claim 1 or 2 characterised in that each third prediction of the image data value takes into account the slopes of the gradients $(P_{[i-1,j-1]}, P_{[i,j-1]}), (P_{[i-1,j-1]}, P_{[i-1,j]})$.

4. A method as claimed in any preceding claim characterised in that at least some of the at least three predictions of image data values of each region $(P_{[i,j]})$ for which a prediction is being made are based on the actual image data values of at least two regions $(P_{[i,j-2]}, P_{[i,j-1]}, P_{[i-2,j]}, P_{[i-1,j]})$, one $(P_{[i,j-1]}, P_{[i-1,j]})$ of which lies closer to the region $(P_{[i,j]})$ for which the prediction is being made than the others $(P_{[i,j-2]}, P_{[i-2,j]})$ of the said at least two regions, the actual image data values of the said at least two regions being weighted in proportion to their closeness to the region $(P_{[i,j]})$ for which a prediction is being made.

5. A method as claimed in any preceding claim characterised in that the at least three predictions of image data values are made for every region $(P_{[i,j]})$ of the digital image.

6. A method as claimed in any preceding claim characterised in that the respective median difference values are compressed by encoding the median difference values with respective variable length codes, unique codes being assigned to the respective median difference values.

7. A method as claimed in Claim 6 characterised in that the shortest code is assigned to the most frequently occurring median difference value, and the longest code is assigned to the least frequently occurring median difference value.

8. A method as claimed in Claim 6 or 7 characterised in that the most frequently occurring median difference value is assigned the value zero.

9. A method as claimed in any of Claims 6 to 8 characterised in that the codes are different for the positive and negative values of the same absolute median difference values.

10. A method as claimed in any of Claims 6 to 9 characterised in that the codes assigned to the median difference values are binary codes.

11. A method as claimed in any of Claims 6 to 10 characterised in that the bit length of the longest code for the median difference values does not exceed the bit length of the data value of any region.

12. A method as claimed in any of Claims 6 to 11 characterised in that the actual data value of a region $(P_{[i,j]})$ is retained instead of the median difference value for that region $(P_{[i,j]})$ should the median difference value for that region $(P_{[i,j]})$ exceed a predetermined value.

13. A method as claimed in Claim 12 characterised in that a first flag means is set to indicate that the data following the flag means is the actual data value of the region $(P_{[i,j]})$.

14. A method as claimed in Claim 12 or 13 characterised in that a second flag means is set to indicate a run of actual data values where the median difference values of a run of regions $(P_{[i,j]})$ exceeds a predetermined value.

15. A method as claimed in Claim 14 characterised in that the number of actual data values included in the run is associated with the second flag means.

16. A method as claimed in Claim 14 or 15 characterised in that the second flag means is provided before the run of actual data values.

17. A method as claimed in any of Claims 6 to 16 characterised in that the coded median difference values and the actual data values for the respective regions are stored in a predetermined format for subsequent retrieval and decompression.

18. A method as claimed in any preceding claim characterised in that noise is separated from the digital image data by separating at least the least significant bit from the value of the data in the respective regions ($P_{[i,j]}$) in which a prediction of the data value is to be made, and from the regions ($P_{[i,j-1]}$, $P_{[i-1,j]}$, $P_{[i-1,j-1]}$) on which the predictions are to be based prior to the prediction being made, and the separated least significant bits are stored in association with the corresponding compressed median difference values of the respective regions.

19. A method as claimed in Claim 18 characterised in that the data values remaining of the respective regions from which one or more least significant bits have been separated is divided by $2^n$ where n is equal to the number of least significant bits separated.

20. A method as claimed in Claim 18 or 19 characterised in that at least some of the digital image data is scanned prior to the separation of noise for determining the number of least significant bits to be separated.

21. A method as claimed in any preceding claim characterised in that the digital image data is modified prior to computing the predicted data values for reducing the numerical difference between the data values occurring in the digital image data, the digital image data being modified by arranging all the determined actual data values occurring in the image data in the form of a series of actual data values in ascending order of data values, assigning each actual data value occurring in the image a modified data value so that the numerical difference between adjacent modified data values is less than the numerical difference between the respective adjacent actual data values in the series, the modified data values forming the data values on which the predictions are based.

22. A method as claimed in Claim 21 characterised in that the modified data values are assigned so that the difference between modified data values which correspond to adjacent data values in the series of data values is unity.

23. A method as claimed in Claim 21 or 22 characterised in that the modified data values and the actual data values are cross-referenced in a look-up table.

24. A method as claimed in Claim 23 characterised in that an inverse look-up table based on the modified and the actual data values is prepared for use in subsequent reconstruction of the image.

25. A method as claimed in Claim 23 or 24 characterised in that each look-up table is stored with the stored compressed median difference values.

26. A method as claimed in any of Claims 23 to 25 characterised in that a histogram of the actual data values occurring in the digital image data is formed for preparing each look-up table.

27. A method as claimed in any preceding claim characterised in that the data value of each region defines a value of greyscale between and including black and white.

28. A method as claimed in any preceding claim characterised in that the data value of each region defines a value of intensity of a colour in a colour image.

29. A method as claimed in any preceding claim characterised in that the compressed data values of the digital image are stored in a predetermined format for retrieval thereof for subsequent decompression.

30. A method as claimed in any preceding claim characterised in that each region ($P_{[i,j]}$) defines a pixel ($P_{[i,j]}$).

31. A method as claimed in any preceding claim characterised in that the digital image is in raster format.

32. A method as claimed in any preceding claim characterised in that the method is carried out on an acquired image after the image has been acquired.

33. A method as claimed in any preceding claim characterised in that the method is carried out on an acquired image while the image is being acquired "on-the-fly".

34. A method as claimed in any preceding claim characterised in that the method is carried out on the acquired image with intermediate storage or in parallel with intermediate storage.

35. A method as claimed in any preceding claim characterised in that the image in compressed form is suitable for storing and/or transmission.

36. A method as claimed in any preceding claim characterised in that the method is used for compressing a three dimensional image, and one of the axes of the three dimensional image is time, the time axis forming a row or column of the matrix, and that row or column forming the row or column as the case may be in which a region or regions are located which form a basis for predicting a data value of a region.

37. A method as claimed in any preceding claim characterised in that the method further comprises the step of decompressing the compressed digital image data, the decompression method comprising the steps in reverse order to the order of the steps of the compression method.

38. Apparatus for compressing digital image data, the apparatus comprising

a means for sequentially scanning a plurality of regions ($P_{[i,j]}$) of the image data for determining the actual values of the image data in respective regions ($P_{[i,j]}$),

a means for making at least three predictions of the value of image data in each of at least some of the regions ($P_{[i,j]}$) based on the determined actual values of some of the already scanned regions ($P_{[i,j-1]}$, $P_{[i-1,j]}$, $P_{[i-1,j-1]}$) which are adjacent to the region ($P_{[i,j]}$) for which the image data is being predicted,

a means for comparing each of the at least three predicted values of image data with the actual value of image data of the corresponding region ($P_{[i,j]}$) for each region ($P_{[i,j]}$) for which a prediction is made,

a means for computing the values of the differences between the respective predicted values of image data and the actual value of image data for each region ($P_{[i,j]}$) for which a prediction is made,

a means for selecting the median difference value for each region ($P_{[i,j]}$) for which a prediction is made, and

a means for compressing the respective median difference values,

characterised in that

the means for making the at least three predictions comprises:

a means for making a first one of the at least three predictions of image data values which is based on the actual image data value of a first region ($P_{[i,j-1]}$) adjacent to the region ($P_{[i,j]}$) for which the prediction is being made, the first region ($P_{[i,j-1]}$) lying in a row (i) in which the region ($P_{[i,j]}$) for which the prediction is being made lies,

a means for making a second one of the at least three predictions of image data values which is based on the actual image data value of a second region ($P_{[i-1,j]}$) adjacent to the region ($P_{[i,j]}$) for which the prediction is being made, the second region ($P_{[i-1,j]}$) lying in a column (j) in which the region ($P_{[i,j]}$) for which the prediction is being made lies, and

a means for making a third one of the at least three predictions of image data values which is based on the gradients of actual image data values from a third region ($P_{[i-1,j-1]}$) to the first region ($P_{[i,j-1]}$) and from the third region ($P_{[i-1,j-1]}$) to the second region ($P_{[i-1,j]}$), the third region ($P_{[i-1,j-1]}$) being located adjacent to the first and second regions ($P_{[i,j-1]}$, $P_{[i-1,j]}$) and adjacent to the region ($P_{[i,j]}$) for which the prediction is being made and lying in the row (i-1) in which the second region ($P_{[i-1,j]}$) lies, and lying in the column (j-1) in which the first region ($P_{[i,j-1]}$) lies.

**Patentansprüche**

1. Verfahren zum Komprimieren von digitalen Bilddaten, wobei das Verfahren die Schritte umfaßt:

Abtasten einer Mehrzahl von Bereichen ($P_{[i,j]}$) der Bilddaten in Folge und Bestimmen der tatsächlichen Werte der Bilddaten in entsprechenden Bereichen ($P_{[i,j]}$),

Erstellen mindestens dreier Vorhersagen des Werts der Bilddaten für jeden von mindestens einigen Bereichen ($P_{[i,j]}$) auf der Grundlage der bestimmten tatsächlichen Werte der Bilddaten einiger der bereits abgetasteten Bereiche ($P_{[i,j-1]}$, $P_{[i-1,j]}$, $P_{[i-1,j-1]}$), die zu dem Bereich ($P_{[i,j]}$) benachbart sind, für den der Wert der Bilddaten vorhergesagt wird,

Vergleichen jedes der mindestens zwei vorhergesagten Werte der Bilddaten mit dem tatsächlichen Wert der Bilddaten ($P_{[i,j]}$) des entsprechenden Bereichs ($P_{[i,j]}$) für jeden Bereich ($P_{[i,j]}$), für den die Vorhersage erstellt wird,

Berechnen der Differenzwerte zwischen den entsprechenden vorhergesagten Werten der Bilddaten und dem tatsächlichen Wert der Bilddaten für jeden Bereich ($P_{[i,j]}$), für den eine Vorhersage erstellt wird,

Auswählen des Differenzwerts, der der Median der mindestens drei Differenzwerte ist, Differenzwertmedian für jeden Bereich ($P_{[i,j]}$), für den eine Vorhersage erstellt wird, und

Komprimieren der entsprechenden Differenzwertmediane,

dadurch gekennzeichnet, daß

eine erste der mindestens drei Vorhersagen von Bilddatenwerten für jeden Bereich ($P_{[i,j]}$), für den eine Vorhersage erstellt wird, auf dem tatsächlichen Bilddatenwert eines ersten Bereichs $(P_{[i,j-1]})$ basiert, der zu dem Bereich $(P_{[i,j]})$, für den die Vorhersage erstellt wird, benachbart ist, wobei der erste Bereich $(P_{[i,j-1]})$ in der Zeile (i) liegt, in der der Bereich $(P_{[i,j]})$ liegt, für den die Vorhersage erstellt wird,

ein zweiter der mindestens drei Vorhersagen von Bilddatenwerten für jeden Bereich $(P_{[i,j]})$, für den eine Vorhersage erstellt wird, auf dem tatsächlichen Bilddatenwert eines zweiten Bereichs $(P_{[i-1,j]})$ basiert, der zu dem Bereich $(P_{[i,j]})$, für den die Vorhersage erstellt wird, benachbart ist, wobei der zweite Bereich $(P_{[i-1,j]})$ in der Spalte (j) liegt, in der der Bereich $(P_{[i,j]})$ liegt, für den die Vorhersage erstellt wird, und

eine dritte der mindestens drei Vorhersagen von Bilddatenwerten für jeden Bereich $(P_{[i,j]})$, für den eine Vorhersage erstellt wird, auf den Gradienten der tatsächlichen Bilddatenwerte von einem dritten $(P_{[i-1,j-1]})$ zu dem ersten Bereich $(P_{[i,j-1]})$ und von dem dritten Bereich $(P_{[i-1,j-1]})$ zu dem zweiten Bereich $(P_{[i-1,j]})$ basiert, wobei der dritte Bereich $(P_{[i-1,j-1]})$ benachbart zu den ersten und zweiten Bereichen $(P_{[i,j-1]})$, $(P_{[i-1,j]})$ angeordnet ist und in der Zeile (i-1) liegt, in der der zweite Bereich $(P_{[i-1,j]})$ liegt, und in der Spalte (j-1) liegt, in der der erste Bereich $(P_{[i,j-1]})$ liegt.

2. Verfahren nach Anspruch 1, dadurch gekennzeichnet, daß die digitalen Bilddaten Bereich $(P_{[i,j]})$ für Bereich $(P_{[i,j]})$ als matrixförmige Anordnung von Bereichen $(P_{[i,j]})$ abgetastet werden.

3. Verfahren nach Anspruch 1 oder 2, dadurch gekennzeichnet, daß jede dritte Vorhersage der Bilddatenwerte die Neigung der Gradienten $(P_{[i-1,j-1]}, P_{[i,j-1]})$, $(P_{[i-1,j-1]}, P_{[i-1,j]})$ berücksichtigt.

4. Verfahren nach einem der vorhergehenden Ansprüche, dadurch gekennzeichnet, daß mindestens einige der mindestens drei Vorhersagen von Bilddatenwerten für jeden Bereich $(P_{[i,j]})$, für den eine Vorhersage erstellt wird, auf den tatsächlichen Bilddatenwerten mindestens zweier Bereiche $(P_{[i,j-2]}, P_{[i,j-1]}, P_{[i-2,j]}, P_{[i-1,j]})$ basieren, von denen einer $(P_{[i,j-1]}, P_{[i-1,j]})$ näher an dem Bereich $(P_{[i,j]})$ liegt, für den die Vorhersage erstellt wird, als die anderen $(P_{[i,j-2]}, P_{[i-2,j]})$ der mindestens zwei Bereiche, wobei die tatsächlichen Bilddatenwerte dieser mindestens zwei Bereiche gemäß ihrer Nähe zu dem Bereich $(P_{[i,j]})$ gewichtet werden, für den eine Vorhersage erstellt wird.

5. Verfahren nach einem der vorhergehenden Ansprüche, dadurch gekennzeichnet, daß die mindestens drei Vorhersagen von Bilddatenwerten für jeden Bereich $(P_{[i,j]})$ des digitalen Bilds erstellt werden.

6. Verfahren nach einem der vorhergehenden Ansprüche, dadurch gekennzeichnet, daß die entsprechenden Differenzwertmediane komprimiert werden, indem die Differenzwertmediane durch Codes mit entsprechend variabler Länge codiert werden, wobei den entsprechenden Differenzwertmedianen eindeutige Codes zugeordnet werden.

7. Verfahren nach Anspruch 6, dadurch gekennzeichnet, daß der kürzeste Code dem am häufigsten auftretenden Differenzwertmedian zugeordnet wird, und daß der längste Code dem am wenigstens häufig auftretenden Differenzwertmedian zugeordnet wird.

8. Verfahren nach Anspruch 6 oder 7, dadurch gekennzeichnet, daß dem am häufigsten auftretenden Differenzwertmedian der Wert Null zugeordnet wird.

9. Verfahren nach einem der Ansprüche 6 bis 8, dadurch gekennzeichnet, daß die Codes für die positiven und negativen Werte der absolut gesehen identischen Differenzwertmediane unterschiedlich sind.

10. Verfahren nach einem der Ansprüche 6 bis 9, dadurch gekennzeichnet, daß die den Differenzwertmedianen zugeordneten Codes binäre Codes sind.

11. Verfahren nach einem der Ansprüche 6 bis 10, dadurch gekennzeichnet, daß die Länge des längsten Codes in Bits (Bitlänge) für die Differenzwertmediane die Bitlänge des Datenwerts jedes Bereichs nicht überschreitet.

12. Verfahren nach einem der Ansprüche 6 bis 11, dadurch gekennzeichnet, daß anstelle des Differenzwertmedians für einen Bereich $(P_{[i,j]})$ der tatsächliche Datenwert des Bereichs beibehalten wird, wenn der Differenzwertmedian für diesen Bereich $(P_{[i,j]})$ einen vorbestimmten Wert überschreitet.

13. Verfahren nach Anspruch 12, dadurch gekennzeichnet, daß ein erstes Kennzeichen (flag means) gesetzt wird, um anzuzeigen, daß die Daten, die dem Kennzeichen folgen, der tatsächliche Datenwert des Bereichs $(P_{[i,j]})$ sind.

14. Verfahren nach Anspruch 12 oder 13, dadurch gekennzeichnet, daß ein zweites Kennzeichen gesetzt wird, um eine Folge von tatsächlichen Datenwerten anzuzeigen, wenn die Differenzwertmediane für eine Folge von Bereichen $(P_{[i,j]})$ einen vorbestimmten Wert überschreiten.

15. Verfahren nach Anspruch 14, dadurch gekennzeichnet, daß die Anzahl der tatsächlichen Datenwerte, die Teil der Folge sind, dem zweiten Kennzeichen zugeordnet ist.

16. Verfahren nach Anspruch 14 oder 15, dadurch gekennzeichnet, daß das zweite Kennzeichen vor der Folge der tatsächlichen Datenwerte bereitgestellt wird.

17. Verfahren nach einem der Ansprüche 6 bis 16, dadurch gekennzeichnet, daß die codierten Differenzwertmediane und die tatsächlichen Datenwerte für die entsprechenden Bereiche in einem vorbestimmten Format zum späteren Rückgewinnen und Dekomprimieren abgelegt werden.

18. Verfahren nach einem der vorhergehenden Ansprüche, dadurch gekennzeichnet, daß von den digitalen Bilddaten Rauschen abgetrennt wird, indem von dem Wert der Daten in den entsprechenden Bereichen ($P_{[i,j]}$), in denen eine Vorhersage des Datenwerts erstellt werden soll, und von den Bereichen ($P_{[i,j-1]}$, $P_{[i-1,j]}$, $P_{[i-1,j-1]}$), auf denen die Vorhersagen basieren, vor dem Erstellen der Vorhersage mindestens das niedrigstwertige Bit abgetrennt wird, und daß die abgetrennten niedrigstwertigen Bits verbunden mit den entsprechenden komprimierten Differenzwertmedianen der entsprechenden Bereiche abgelegt werden.

19. Verfahren nach Anspruch 18, dadurch gekennzeichnet, daß die Datenwerte, die für die entsprechenden Bereiche verbleiben, bei denen ein oder mehrere niedrigstwertige Bits abgetrennt wurden, durch $2^n$ geteilt werden, wobei n gleich der Anzahl der abgetrennten niedrigstwertigen Bits ist.

20. Verfahren nach Anspruch 18 oder 19, dadurch gekennzeichnet, daß vor dem Abtrennen von Rauschen mindestens ein Teil der digitalen Bilddaten abgetastet wird, um die Anzahl der abzutrennenden niedrigstwertigen Bits zu bestimmen.

21. Verfahren nach einem der vorhergehenden Ansprüche, dadurch gekennzeichnet, daß die digitalen Bilddaten vor dem Berechnen der vorhergesagten Datenwerte abgeändert werden, um die in den digitalen Bilddaten auftretende zahlenmäßige Differenz zwischen den Datenwerten zu verringern, wobei die digitalen Bilddaten abgeändert werden, indem sämtliche in den Bilddaten auftretenden bestimmten tatsächlichen Datenwerte in der Form einer Reihe von tatsächlichen Datenwerten in aufsteigender Reihenfolge der Datenwerte angeordnet werden, wobei jedem in dem Bild auftretenden tatsächlichen Datenwert ein abgeänderter Datenwert zugeordnet wird, so daß der zahlenmäßige Unterschied zwischen benachbarten abgeänderten Datenwerten geringer als der zahlenmäßige Unterschied zwischen den entsprechenden benachbarten tatsächlichen Datenwerten in der Reihe ist, wobei die abgeänderten Datenwerte die Datenwerte bilden, auf denen die Vorhersagen basieren.

22. Verfahren nach Anspruch 21, dadurch gekennzeichnet, daß die abgeänderten Datenwerte so zugeordnet werden, daß der Unterschied zwischen abgeänderten Datenwerten, die in der Reihe von Datenwerten benachbarten Datenwerten entsprechen, Eins ist.

23. Verfahren nach Anspruch 21 oder 22, dadurch gekennzeichnet, daß die abgeänderten Datenwerte und die tatsächlichen Datenwerte durch Querverweis in einer Nachschlagtabelle einander zugeordnet sind.

24. Verfahren nach Anspruch 23, dadurch gekennzeichnet, daß eine inverse Nachschlagtabelle, die auf den abgeänderten und den tatsächlichen Datenwerten basiert, zur Verwendung bei der nachfolgenden Rekonstruktion des Bildes vorbereitet wird.

25. Verfahren nach Anspruch 23 oder 24, dadurch gekennzeichnet, daß jede Nachschlagtabelle mit den abgelegten komprimierten Differenzwertmedianen abgelegt wird.

26. Verfahren nach einem der Ansprüche 23 bis 25, dadurch gekennzeichnet, daß zum Vorbereiten jeder Nachschlagtabelle ein Histogramm der in den digitalen Bilddaten auftretenden tatsächlichen Datenwerte erstellt wird.

27. Verfahren nach einem der vorhergehenden Ansprüche, dadurch gekennzeichnet, daß der Datenwert jedes Bereichs einen Wert einer Graustufe zwischen einschließlich Schwarz und Weiß definiert.

28. Verfahren nach einem der vorhergehenden Ansprüche, dadurch gekennzeichnet, daß der Datenwert jedes Bereichs einen Wert der Intensität einer Farbe in einem Farbbild definiert.

29. Verfahren nach einem der vorhergehenden Ansprüche, dadurch gekennzeichnet, daß die komprimierten Datenwerte des digitalen Bilds in einem vorbestimmten Format zum Wiederherstellen derselben für eine nachfolgende Dekomprimierung abgelegt werden.

30. Verfahren nach einem der vorhergehenden Ansprüche, dadurch gekennzeichnet, daß jeder Bereich ($P_{[i,j]}$) ein Pixel ($P_{[i,j]}$) definiert.

31. Verfahren nach einem der vorhergehenden Ansprüche, dadurch gekennzeichnet, daß das digitale Bild ein Bild im Rasterformat ist.

32. Verfahren nach einem der vorhergehenden Ansprüche, dadurch gekennzeichnet, daß das Verfahren an einem gewonnenen Bild durchgeführt wird, nachdem das Bild gewonnen wurde.

33. Verfahren nach einem der vorhergehenden Ansprüche, dadurch gekennzeichnet, daß das Verfahren an einem gewonnenen Bild durchgeführt wird, während das Bild im selben Zuge gewonnen wird.

34. Verfahren nach einem der vorhergehenden Ansprüche, dadurch gekennzeichnet, daß das Verfahren an dem gewonnenen Bild mit Zwischenspeicherung oder parallel zu einer Zwischenspeicherung ausgeführt wird.

35. Verfahren nach einem der vorhergehenden Ansprüche, dadurch gekennzeichnet, daß das Bild in komprimierter Form zum Ablegen und/oder Übertragen geeignet ist.

36. Verfahren nach einem der vorhergehenden Ansprüche, dadurch gekennzeichnet, daß das Verfahren zum Komprimieren eines dreidimensionalen Bilds verwendet wird, wobei eine der Achsen des dreidimensionalen Bilds die Zeit ist, wobei die Zeitachse eine Zeile oder Spalte der Matrix bildet, und diese Zeile oder Spalte die Zeile oder Spalte bildet, in der ein Bereich oder Bereiche liegen kann/können, der/die eine Grundlage zum Vorhersagen eines Datenwerts eines Bereichs bildet/bilden.

37. Verfahren nach einem der vorhergehenden Ansprüche, dadurch gekennzeichnet, daß das Verfahren ferner den Schritt des Dekomprimierens der komprimierten digitalen Bilddaten umfaßt, wobei das Verfahren zum Dekomprimieren die Schritte in umgekehrter Reihenfolge gegenüber der der Schritte des Verfahrens zum Komprimieren umfaßt.

38. Vorrichtung zum Komprimieren von digitalen Bilddaten, wobei die Vorrichtung umfaßt:

    eine Einrichtung, um eine Mehrzahl von Bereichen ($P_{[i,j]}$) der Bilddaten in Folge abzutasten, um die tatsächlichen Werte der Bilddaten in entsprechenden Bereichen ($P_{[i,j]}$) zu bestimmen,
    eine Einrichtung zum Erstellen von mindestens drei Vorhersagen für den Wert von Bilddaten in jedem von mindestens einigen der Bereiche ($P_{[i,j]}$) auf der Grundlage der bestimmten tatsächlichen Werte einiger der bereits abgetasteten Bereiche ($P_{[i,j-1]}$, $P_{[i-1,j]}$, $P_{[i-1,j-1]}$), die zu dem Bereich ($P_{[i,j]}$) benachbart sind, für den die Bilddaten vorhergesagt werden,

    eine Einrichtung zum Vergleichen jedes der mindestens drei vorhergesagten Werte von Bilddaten mit dem tatsächlichen Wert von Bilddaten des entsprechenden Bereichs ($P_{[i,j]}$) für jeden Bereich ($P_{[i,j]}$), für den eine Vorhersage erstellt wird,
    eine Einrichtung zum Berechnen der Werte der Unterschiede zwischen den entsprechenden vorhergesagten Werten der Bilddaten und dem tatsächlichen Wert der Bilddaten für jeden Bereich ($P_{[i,j]}$), für den eine Vorhersage erstellt wird,
    eine Einrichtung zum Auswählen des Medians der Differenzwerte (Differenzwertmedians) für jeden Bereich ($P_{[i,j]}$), für den eine Vorhersage erstellt wird, und
    eine Einrichtung zum Komprimieren der entsprechenden Differenzwertmediane,

dadurch gekennzeichnet, daß
    die Einrichtung zum Erstellen der mindestens drei Vorhersagen umfaßt:

    eine Einrichtung zum Erstellen einer ersten der mindestens drei Vorhersagen von Bilddatenwerten, die auf dem tatsächlichen Bilddatenwert eines ersten Bereichs ($P_{[i,j-1]}$) basiert, der dem zu dem Bereich ($P_{[i,j]}$) benachbart ist, für den die Vorhersage erstellt wird, wobei der erste Bereich ($P_{[i,j-1]}$) in der Zeile (i) liegt, in der der Bereich ($P_{[i,j]}$) liegt, für den die Vorhersage erstellt wird,
    eine Einrichtung zum Erstellen einer zweiten der mindestens drei Vorhersagen von Bilddatenwerten, die auf dem tatsächlichen Bilddatenwert eines zweiten Bereichs ($P_{[i-1,j]}$) basiert, der zu dem Bereich ($P_{[i,j]}$), für den die Vorhersage erstellt wird, benachbart ist, wobei der zweite Bereich ($P_{[i-1,j]}$) in der Spalte (j) liegt, in der der Bereich ($P_{[i,j]}$) liegt, für den die Vorhersage erstellt wird, und
    eine Einrichtung zum Erstellen einer dritten der mindestens drei Vorhersagen von Bilddatenwerten, die auf den Gradienten der tatsächlichen Bilddatenwerte von einem dritten Bereich ($P_{[i-1,j-1]}$) zu dem ersten Bereich ($P_{[i,j-1]}$) und von dem dritten Bereich ($P_{[i-1,j-1]}$) zu dem zweiten Bereich ($P_{[i,j-1]}$) basiert, wobei der dritte Bereich ($P_{[i-1,j-1]}$) benachbart zu den ersten und zweiten Bereichen ($P_{[i,j-1]}$, $P_{[i-1,j]}$) und benachbart zu dem Bereich ($P_{[i,j]}$), für den die Vorhersage erstellt wird, angeordnet ist und in der Zeile (i-1) liegt, in der der zweite Bereich ($P_{[i-1,j]}$) liegt, und in der Spalte (j-1) liegt, in der der erste Bereich ($P_{[i,j-1]}$) liegt.

**Revendications**

1. Procédé pour comprimer les données image numériques, le procédé comprenant les étapes consistant à :

explorer séquentiellement plusieurs régions ($P_{[i,j]}$) des données d'image et déterminer les valeurs actuelles des données d'image dans des régions respectives ($P_{[i,j]}$),
faire au moins trois prédictions de la valeur des données d'image pour chacune d'au moins quelques-unes des régions ($P_{[i,j]}$), sur la base des valeurs actuelles déterminées des données d'image de quelques-unes des régions déjà explorées ($P_{[i,j-1]}$, $P_{[i-1,j]}$ $P_{[i-1,\,j-1]}$) qui sont adjacentes à la région ($P_{[i,j]}$) pour laquelle la valeur des données d'image a été prédite,
comparer chacune des au moins trois valeurs prédites des données d'image avec la valeur actuelle des données d'image ($P_{[i,j]}$) de la région correspondante ($P_{[i,j]}$) pour chaque région ($P_{[i,j]}$) pour laquelle une prédiction est faite,
calculer les valeurs de la différence entre les valeurs respectives prédites des données d'image et la valeur actuelle des données d'image pour chaque région ($P_{[i,j]}$) pour laquelle une prédiction est faite,
sélectionner la valeur de différence moyenne des au moins trois valeurs de différence pour chaque région ($P_{[i,j]}$) pour laquelle une prédiction est faite et,
comprimer les valeurs de différence moyennes respectives,

caractérisé en ce que

une première des au moins trois prédictions de valeurs de données d'image de chaque région ($P_{[i,j]}$) pour laquelle une prédiction est faite, est basée sur la valeur de données d'image actuelle d'une première région ($P_{[i,j-1]}$) adjacente à la région ($P_{[i,j]}$) pour laquelle la prédiction est faite, la première région ($P_{[i,j-1]}$) se situant dans une rangée (i) dans laquelle se situe la région ($P_{[i,j]}$) pour laquelle la prédiction est faite,
une deuxième des au moins trois prédictions de valeurs de données d'image de chaque région ($P_{[i,j]}$) pour laquelle une prédiction est faite est basée sur la valeur de données d'image actuelle d'une deuxième région ($P_{[i-1,j]}$) adjacente à la région ($P_{[i,j]}$) pour laquelle la prédiction est faite, la deuxième région ($P_{[i-1,j]}$) se situant dans une colonne (j) dans laquelle se situe la région ($P_{[i,j]}$) pour laquelle la prédiction est faite, et
une troisième des au moins trois prédictions de valeurs de données d'image de chaque région ($P_{[i,j]}$) pour laquelle une prédiction est faite, est basée sur les gradients de valeurs de données d'image actuelles d'une troisième ($P_{[i-1,j-1]}$) à la première région ($P_{[i,j-1]}$) et de la troisième région ($P_{[i-1,j-1]}$) à la deuxième région ($P_{[i-1,j]}$), la troisième région ($P_{[i-1,j-1]}$) étant localisée pour être adjacente aux première et deuxième régions ($P_{[i,j-1]}$), ($P_{[i-1,j]}$) et se situant dans une rangée (i-1) dans laquelle la deuxième région ($P_{[i-1,j]}$) se situe, et dans la colonne (j-1) dans laquelle la première région (($P_{[i,j-1]}$) se situe.

2. Procédé selon la revendication 1, caractérisé en ce que les données d'image numériques sont explorées région ($P_{[i,j]}$) par région ($P_{[i,j]}$) comme une matrice de régions ($P_{[i,j]}$).

3. Procédé selon la revendication 1 ou 2, caractérisé en ce que chaque troisième prédiction de la valeur de données d'image prend en compte les pentes des gradients ($P_{[i-1,j-1]}$, $P_{[i,j-1]}$), ($P_{[i-1,j-1]}$, $P_{[i-1,j]}$).

4. Procédé selon l'une des revendications précédentes, caractérisé en ce qu'au moins quelques-unes des au moins trois prédictions des valeurs de données d'image de chaque région ($P_{[i,j]}$) pour laquelle une prédiction est faite, sont basées sur les valeurs de données d'image actuelles d'au moins deux régions ($P_{[i,j-2]}$, $P_{[i,j-1]}$, $P_{[i-2,j]}$, $P_{[i-1,j]}$), dont une ($P_{[i,j-1]}$), $P_{[i-1,\,j]}$) qui se situe plus près de la région ($P_{[i,j]}$) pour laquelle la prédiction est faite que les autres ($P_{[i,j-2]}$, $P_{[i-2,j]}$) desdites au moins deux régions, les valeurs de données d'image actuelles desdites au moins deux régions étant pondérées en proportion à leur proximité à la région $P_{[i,j]}$) pour laquelle une prédiction est faite.

5. Procédé selon l'une des revendications précédentes, caractérisé en ce que les au moins trois prédictions de valeurs de données d'image sont faites pour chaque région ($P_{[i,j]}$) de l'image numérique.

6. Procédé selon l'une des revendications précédentes, caractérisé en ce que les valeurs de différence moyennes respectives sont comprimées en codant les valeurs de différence moyennes par des codes de longueurs variables respectifs, des codes uniques étant attribués aux valeurs de différence moyennes respectives.

7. Procédé selon la revendication 6, caractérisé en ce que le code le plus court est attribué à la valeur de différence moyenne la plus fréquente, et le code le plus long est attribué à la valeur de différence moyenne la moins fréquente.

8. Procédé selon les revendications 6 ou 7, caractérisé en ce que la valeur zéro est attribuée à la valeur de différence moyenne la plus fréquente.

9. Procédé selon l'une des revendications 6 à 8, caractérisé en ce que les codes sont différents pour les valeurs positives et négatives des mêmes valeurs de différence moyennes absolues.

10. Procédé selon l'une des revendications 6 à 9, caractérisé en ce que les codes attribués aux valeurs de différence moyennes sont des codes binaires.

11. Procédé selon l'une des revendications 6 à 10, caractérisé en ce que la longueur de l'élément binaire du code le plus long pour les valeurs de différence moyennes ne dépasse pas la longueur de l'élément binaire de la valeur des données de n'importe quelle région.

12. Procédé selon l'une des revendications 6 à 11, caractérisé en ce que la valeur des données actuelle d'une région$(P_{[i,j]})$ est retenue à la place de la valeur de différence moyenne pour cette région $(P_{[i,j]})$ dans le cas où la valeur de différence moyenne pour cette région $(P_{[i,j]})$ dépasse une valeur prédéterminée.

13. Procédé selon la revendication 12, caractérisé en ce qu'un premier moyen de drapeau est établi pour indiquer que les données suivant le moyen de drapeau constituent la valeur des données actuelle de la région $(P_{[i,j]})$.

14. Procédé selon les revendications 12 ou 13, caractérisé en ce qu'un deuxième moyen de drapeau est établi pour indiquer un passage de valeurs de données actuelles lorsque les valeurs de différence moyennes d'un passage de régions $(P_{[i,j]})$ dépasse une valeur prédéterminée.

15. Procédé selon la revendication 14, caractérisé en ce que le nombre de valeurs de données actuelles incluses dans le passage est associé au deuxième moyen de drapeau.

16. Procédé selon les revendications 14 ou 15, caractérisé en ce que le deuxième moyen de drapeau est prévu avant le passage de valeurs de données actuelles.

17. Procédé selon l'une des revendications 6 à 16, caractérisé en ce que les valeurs de différence moyennes codées et les valeurs de données actuelles pour les régions respectives sont stockées selon un format prédéterminé en vue d'une extraction et d'une décompression subséquentes.

18. Procédé selon l'une des revendications précédentes, caractérisé en ce que le bruit est séparé des données d'image numériques en séparant au moins l'élément binaire le moins signifiant de la valeur des données dans les régions respectives $(P_{[i,j]})$ dans laquelle une prédiction de la valeur de donnée doit être faite, et des régions $(P_{[i,j-1]}, P_{[i-1,j]}. P_{[i-1,j-1]})$ sur lesquelles les prédictions doivent être basées avant la prédiction à faire, et les éléments binaires séparés les moins signifiants sont stockés en association avec les valeurs de différence moyenne comprimées correspondantes des régions respectives.

19. Procédé selon la revendication 18, caractérisé en ce que les valeurs de données restantes des régions respectives desquelles un ou plusieurs éléments binaires les moins signifiants ont été séparés sont divisées par $2^n$ où n est égal au nombre des éléments binaires séparés les moins signifiants.

20. Procédé selon les revendications 18 ou 19, caractérisé en ce qu'au moins quelques-unes des données d'image numériques sont explorées avant la séparation du bruit pour déterminer le nombre des éléments binaires les moins signifiants à séparer.

21. Procédé selon l'une des revendications précédentes, caractérisé en ce que les données d'image numériques sont modifiées avant le calcul des valeurs de données prédites pour réduire la différence numérique entre les valeurs de données se produisant dans les données d'image numériques, les données d'image numériques étant modifiées en agençant toutes les valeurs de données actuelles déterminées produites dans les données d'image sous forme d'une série de valeurs de données actuelles dans l'ordre ascendant des valeurs de données, en attribuant à chaque valeur de données actuelles produites dans l'image une valeur de données modifiées de telle sorte que la différence numérique entre des valeurs de données modifiées adjacentes est plus petite que la différence numérique entre les valeurs de données actuelles adjacentes respectives dans les séries, les valeurs de données modifiées formant les valeurs de données sur lesquelles les prédictions sont basées.

22. Procédé selon la revendication 21, caractérisé en ce que les valeurs de données modifiées sont attribuées de telle sorte que la différence entre des valeurs de données modifiées qui correspondent à des valeurs de données adjacentes clans les séries de valeurs de données est une unité.

23. Procédé selon les revendications 21 ou 22, caractérisé en ce que les valeurs de données modifiées et les valeurs de données actuelles sont listées avec des correspondances dans une table de consultation.

**24.** Procédé selon la revendication 23, caractérisé en ce qu'une table de consultation inverse basée sur les valeurs de données modifiées et actuelles est préparée pour l'utilisation lors d'une reconstruction subséquente de l'image.

**25.** Procédé selon les revendications 23 ou 24, caractérisé en ce que chaque table de consultation est stockée avec les valeurs de différence moyennes comprimées stockées.

**26.** Procédé selon l'une des revendications 23 à 25, caractérisé en ce qu'un histogramme des valeurs de données actuelles produites dans les données d'image numériques est formé pour préparer chaque table de consultation.

**27.** Procédé selon l'une des revendications précédentes, caractérisé en ce que la valeur de données de chaque région définit une valeur d'échelle de gris entre et incluant le noir et le blanc.

**28.** Procédé selon l'une des revendications précédentes, caractérisé en ce que la valeur de données de chaque région définit une valeur d'intensité d'une couleur dans une image couleur.

**29.** Procédé selon l'une des revendications précédentes, caractérisé en ce que les valeurs de données comprimées de l'image numérique sont stockées sous un format prédéterminée pour l'extraction de celles-ci pour une décompression subséquente.

**30.** Procédé selon l'une des revendications précédentes, caractérisé en ce que chaque région ($P_{[i,j]}$) définit un élément d'image ($P_{[i,,j]}$).

**31.** Procédé selon l'une des revendications précédentes, caractérisé en ce que l'image numérique est sous format trame.

**32.** Procédé selon l'une des revendications précédentes, caractérisé en ce que le procédé est exécuté sur une image acquise après que l'image a été acquise.

**33.** Procédé selon l'une des revendications précédentes, caractérisé en ce que le procédé est exécuté sur une image acquise pendant que l'image est acquise « à la volée ».

**34.** Procédé selon l'une des revendications précédentes, caractérisé en ce que le procédé est exécuté sur l'image acquise, avec un stockage intermédiaire ou en parallèle avec un stockage intermédiaire.

**35.** Procédé selon l'une des revendications précédentes, caractérisé en ce que l'image sous forme comprimée convient pour le stockage et/ou la transmission.

**36.** Procédé selon l'une des revendications précédentes, caractérisé en ce que le procédé est utilisé pour comprimer une image tridimensionnelle, et l'un des axes de l'image tridimensionnelle est le temps, l'axe de temps formant une rangée ou colonne de la matrice, et en ce que la rangée ou la colonne formant la rangée ou colonne, selon le cas, dans laquelle une ou des régions se situent, forment une base pour prédire une valeur de données d'une région.

**37.** Procédé selon l'une des revendications précédentes, caractérisé en ce que le procédé comprend en outre l'étape consistant à décomprimer les données d'image numériques comprimées, le procédé de décompression comprenant les étapes dans l'ordre inverse à l'ordre des étapes du procédé de compression.

**38.** Appareil pour comprimer des données d'image numériques, l'appareil comprenant

un moyen pour explorer séquentiellement plusieurs régions ($P_{[i,j]}$) des données d'image pour déterminer les valeurs actuelles des données d'image dans des régions respectives ($P_{[i,j]}$)

un moyen pour faire au moins trois prédictions de la valeur des données d'image dans chacune d'au moins quelques-unes des régions ($P_{[i,j]}$), sur la base des valeurs actuelles déterminées de quelques-unes des régions déjà explorées ($P_{[i,j-1]}$, $P_{[i-1,j]}$), $P_{[i-1,j-1]}$) qui sont adjacentes à la région ($P_{[i,j]}$) pour laquelle les données d'image sont en train d'être prédites,

un moyen pour comparer chacune des au moins trois valeurs prédites des données d'image avec la valeur actuelle des données d'image de la région correspondante ($P_{[i,j]}$) pour chaque région ($P_{[i,j]}$) pour laquelle une prédiction est faite,

un moyen pour calculer les valeurs des différences entre les valeurs respectives prédites des données d'image et la valeur actuelle des données d'image pour chaque région ($P_{[i,j]}$) pour laquelle une prédiction est faite,

un moyen pour sélectionner la valeur de différence moyenne pour chaque région ($P_{[i,j]}$) pour laquelle une prédiction est faite et

un moyen pour comprimer les valeurs de différence moyennes respectives,

caractérisé en ce que
le moyen pour faire les au moins trois prédictions comprend:

un moyen pour faire une première des au moins trois prédictions des valeurs de données d'image qui est basée sur la valeur de données d'image actuelle d'une première région ($P_{[i,j-1]}$) adjacente à la région ($P_{[i,j]}$) pour laquelle la prédiction est en train d'être faite, la première région ($P_{[i,j-1]}$) se situe en une rangée (i) clans laquelle se situe la région ($P_{[i,j]}$) pour laquelle la prédiction est en train d'être faite,

un moyen pour faire une deuxième des au moins trois prédictions de valeurs de données d'image qui est basée sur la valeur de données d'image actuelle d'une deuxième région ($P_{[i-1,j]}$) adjacente à la région($P_{[i,j]}$) pour laquelle la prédiction est en train d'être faite, la deuxième région ($P_{[i-1,j]}$) se situant dans une colonne (j) dans laquelle se situe la région ($P_{[i,j]}$) pour laquelle la prédiction est en train d'être faite, et

un moyen pour faire une troisième des au moins trois prédictions de valeurs de données d'image qui est basée sur les gradients de valeurs de données d'image actuelles d'une troisième région ($P_{[i-1,j-1]}$) à la première région ($P_{[i,j-1]}$) et de la troisième région ($P_{[i-1,j-1]}$) à la deuxième région ($P_{[i-1,j]}$), la troisième région ($P_{[i-1,j-1]}$) étant adjacente aux première et deuxième régions ($P_{[i,j-1]}$, $P_{[i-1,j]}$) et adjacente à la région ($P_{[i,j]}$) pour laquelle la prédiction est en train d'être faite et se situant dans la rangée (i-1) dans laquelle la deuxième région ($P_{[i-1,j]}$) se situe, et se situant dans la colonne (j-1) dans laquelle la première région ($P_{[i,j-1]}$) se situe.

**Fig. 1**

|                   | j  | j+1 | j+2 | j+3 | j+4 | j+5 | j+6 | j+7 | j+8 | j+9 |
|-------------------|----|-----|-----|-----|-----|-----|-----|-----|-----|-----|
| modified values   | 10 | 13  | 17  | 26  | 34  | 39  | 41  | 42  | 48  | 45  |
| noise component   | 1  | 2   | 3   | 0   | 1   | 1   | 0   | 2   | 3   | 0   |
| median differences| +1 | +1  | -2  | -9  | +8  | +2  | -1  | 0   | +7  | +1  |

**Fig. 11**

| +1 | +1 | -2 | Lit 2 | 26 | 34 | +2 | -1 | 0 | Lit 1 | 48 | +1 |
|----|----|----|-------|----|----|----|----|---|-------|----|----|
| 101 01 | 101 10 | 1100 11 | 11111111 0010 | 011010 00 | 100111 01 | 1101 01 | 100 00 | 0 10 | 11111110 | 110000 11 | 101 00 |

**Fig. 12**

| Step 1. | Input original image |
|---------|---------------------|
| Step 2. | Histogram compacting |
| Step 3. | Noise separation |
| Step 4. | Pixel prediction |
| Step 5. | Difference coding |
| Step 6. | Bit packing |
| Step 7. | LZW compression |
| Step 8. | Output compressed image |

| Step 16. | Output restored image |
|----------|----------------------|
| Step 15. | Histogram restoration |
| Step 14. | Noise restoration |
| Step 13. | Decode differences |
| Step 12. | Pixel prediction |
| Step 11. | Bit unpacking |
| Step 10. | LZW decompression |
| Step 9. | Input compressed image |

**Fig. 2**

**Fig. 3**

**Fig. 10**

| Difference | Bitcode |
|------------|---------|
| -6 | 11111100 |
| -5 | 1111100 |
| -4 | 111100 |
| -3 | 11100 |
| -2 | 1100 |
| -1 | 100 |
| 0 | 0 |
| +1 | 101 |
| +2 | 1101 |
| +3 | 11101 |
| +4 | 111101 |
| +5 | 1111101 |
| +6 | 11111101 |
| Lit 1 | 11111110 |
| Lit N | 11111111 |

**Fig. 9**

Greyscale

**Freq.**

| 0 | 1 | 2 | 3 | 4 | 5 | 6 | 7 | 8 | 9 | 10 |
|---|---|---|---|---|---|---|---|---|---|----|
| 0 | 4 | 0 | 0 | 5 | 0 | 0 | 10 | 0 | 0 | 11 |

| 247 | 248 | 249 | 250 | 251 | 252 | 253 | 254 | 255 |
|-----|-----|-----|-----|-----|-----|-----|-----|-----|
| 4 | 0 | 0 | 3 | 0 | 0 | 0 | 0 | 1 |

**(a)**

**FLUT**

| 0 | 1 | 2 | 3 | 4 | 5 | 6 | 7 | 8 | 9 | 10 |
|---|---|---|---|---|---|---|---|---|---|----|
|   | 0 |   |   | 1 |   |   | 2 |   |   | 3 |

| 247 | 248 | 249 | 250 | 251 | 252 | 253 | 254 | 255 |
|-----|-----|-----|-----|-----|-----|-----|-----|-----|
| 92 |   | 93 |   |   |   |   |   | 94 |

**(b)**

**ILUT**

| 0 | 1 | 2 | 3 | | 92 | 93 | 94 |
|---|---|---|---|---|----|----|----|
| 1 | 4 | 7 | 10 | | 247 | 250 | 255 |

**(c)**

## Fig. 5

**Freq.**

Greyscale: 0 1 2 3 4 5 6 7 8 9 10    247 248 249 250 251 252 253 254 255

**Greyscale**

## Fig. 4

| | Col. j-2 | Col. j-1 | Col. j | Col. j+1 | Col. j+2 | Col. j+3 | Col. j+4 | Col. j+5 | Col. j+6 | Col. j+7 | Col. j+8 | Col. j+9 | |
|---|---|---|---|---|---|---|---|---|---|---|---|---|---|
| Row i-2 | $P_{(i-2,j-2)}$ | $P_{(i-2,j-1)}$ | $P_{(i-2,j)}$ | $P_{(i-2,j+1)}$ | $P_{(i-2,j+2)}$ | $P_{(i-2,j+3)}$ | $P_{(i-2,j+4)}$ | $P_{(i-2,j+5)}$ | $P_{(i-2,j+6)}$ | $P_{(i-2,j+7)}$ | $P_{(i-2,j+8)}$ | $P_{(i-2,j+9)}$ | |
| Row i-1 | $P_{(i-1,j-2)}$ 17 | $P_{(i-1,j-1)}$ 32 | $P_{(i-1,j)}$ 45 | $P_{(i-1,j+1)}$ 55 | $P_{(i-1,j+2)}$ 76 | $P_{(i-1,j+3)}$ 150 | $P_{(i-1,j+4)}$ 147 | $P_{(i-1,j+5)}$ 157 | $P_{(i-1,j+6)}$ 171 | $P_{(i-1,j+7)}$ 172 | $P_{(i-1,j+8)}$ 166 | $P_{(i-1,j+9)}$ 149 | (a) |
| Row i | $P_{(i,j-2)}$ 11 | $P_{(i,j-1)}$ 26 | $P_{(i,j)}$ 41 | $P_{(i,j+1)}$ 54 | $P_{(i,j+2)}$ 71 | $P_{(i,j+3)}$ 104 | $P_{(i,j+4)}$ 137 | $P_{(i,j+5)}$ 157 | $P_{(i,j+6)}$ 164 | $P_{(i,j+7)}$ 170 | $P_{(i,j+8)}$ 195 | $P_{(i,j+9)}$ 180 | |

Separated Noise Component (least significant 2 bits):

| | j-1 | j | j+1 | j+2 | j+3 | j+4 | j+5 | j+6 | j+7 | j+8 | j+9 | |
|---|---|---|---|---|---|---|---|---|---|---|---|---|
| i-1 | 0 | 1 | 3 | 0 | 2 | 3 | 1 | 3 | 0 | 2 | 1 | (b) |
| i | 2 | 1 | 2 | 3 | 0 | 1 | 1 | 0 | 2 | 3 | 0 | |

Remaining Image Data (6 bits per pixel):

| | j-1 | j | j+1 | j+2 | j+3 | j+4 | j+5 | j+6 | j+7 | j+8 | j+9 | |
|---|---|---|---|---|---|---|---|---|---|---|---|---|
| i-1 | 8 | 11 | 13 | 19 | 37 | 36 | 39 | 42 | 43 | 41 | 37 | (c) |
| i | 6 | 10 | 13 | 17 | 26 | 34 | 39 | 41 | 42 | 48 | 45 | |

## Fig. 6

Differences Using Prediction $\hat{p}1$:

| | j-1 | j | j+1 | j+2 | j+3 | j+4 | j+5 | j+6 | j+7 | j+8 | j+9 | |
|---|---|---|---|---|---|---|---|---|---|---|---|---|
| i | | +4 | +3 | +4 | +9 | +8 | +5 | +2 | +1 | +6 | -3 | (a) |

Differences Using Prediction $\hat{p}2$:

| | j-1 | j | j+1 | j+2 | j+3 | j+4 | j+5 | j+6 | j+7 | j+8 | j+9 | |
|---|---|---|---|---|---|---|---|---|---|---|---|---|
| i | -2 | -1 | 0 | -2 | -11 | -2 | 0 | -1 | -1 | +7 | +8 | (b) |

Differences Using Prediction $\hat{p}3$:

| | j-1 | j | j+1 | j+2 | j+3 | j+4 | j+5 | j+6 | j+7 | j+8 | j+9 | |
|---|---|---|---|---|---|---|---|---|---|---|---|---|
| i | | +1 | +1 | -2 | -9 | +9 | +2 | -1 | 0 | +8 | +1 | (c) |

Median Difference (median of $\hat{p}1$, $\hat{p}2$ and $\hat{p}3$):

| | j-1 | j | j+1 | j+2 | j+3 | j+4 | j+5 | j+6 | j+7 | j+8 | j+9 | |
|---|---|---|---|---|---|---|---|---|---|---|---|---|
| i | | +1 | +1 | -2 | -9 | +8 | +2 | -1 | 0 | +7 | +1 | (d) |

## Fig. 8

27

$\hat{p}1\ [i,j] = p[i, j - 1]$         **(a)**

$\hat{p}2\ [i,j] = p[i - 1, j]$         **(b)**

$\hat{p}3\ [i,j] = p[i , j - 1] + ( p[i - 1, j] - p[i - 1, j - 1])$         **(c)**

$median(\hat{p}1[i,j],\ \hat{p}2[i,j],\hat{p}3[i,j])$         **(d)**

$median(\hat{p}1[i,j],\ \hat{p}2[i,j],\ \hat{p}3[i,j] ,\ \hat{p}4[i,j] ,\ \hat{p}5[i,j])$

        **(e)**

$median(\hat{p}1[i,j],\ \hat{p}2[i,j] ,\ \hat{p}3[i,j],\ \hat{p}6[i,j],\ \hat{p}7[i,j])$

        **(f)**

Fig. 7

*Pass 1 - greyscale reduction and noise statistics*

```
func: extract greylevel frequency array 'freq[]'
            clear greylevel frequency array                                    1
            for each pixel in the image                                        2
                  increment pixel's greylevel frequency count                  3
            end for
      return freq[]
end func


func: calculate greylevel reduction and restoration look-up-tables 'flut[]' & 'ilut[]'
            for each non-zero greylevel entry in the frequency array 'freq[]'
                  create an index in 'flut' to the next available greylevel in 'ilut'   4
                  create an index in 'ilut' to the non-zero greylevel          5
            end for
      return 'flut[] & ilut[]'
end func


func: calculate number of noise planes 'nr' using bitplane entropy statistics
            set 'nr' to zero
            for each bitplane (starting with the least significant)
                  calculate entropy statistic                                  6
                  calculate runs statistic                                     7
                  if either test indicates no noise then break for             8
                  increment 'nr'                                               9
            end for
            return 'nr'
end func
```

# Fig. 13

*Pass 2 - image compression*

```
proc: output image header information
        output image width, height, bits per pixel,                                    1
        output number of noise bits 'nr',                                              2
        output greylevel restoration look-up-table 'ilut[]'                           3
end proc


proc: compress image
        call extract greylevel frequency array 'freq[]'                               4
        call calculate greylevel reduction and restoration functions 'flut[]' & 'ilut[]'   5
        call calculate number of noise planes 'nr' using bitplane entropy statistics   6
        call output image header information                                           7
        for each pixel in the image
                apply the greyscale reduction function 'flut[]'                        8
                extract the least significant 'nr' bits, if any.                       9
                calculate the selected predictor using neighbourhood pixels           10
                compare predicted value with actual pixel value 'error'               11
                if absolute 'error' is less than or equal to 6                        12
                        output corresponding unique variable length bitcode           13
                else if absolute 'error' is greater than 6
                        output unique bitcode for literals                            14
                        output literal pixel value                                    15
                end if
                output extracted 'nr' bits, if any.                                   16
end proc
```

# Fig. 14

Input data

*predictor type*          *image data*

**Pass 1**

1 → identify bitplanes containing noise          extract greylevel frequency array ← 2

*number of noise bits*          *greylevel histogram* — 4

3 → calculate greylevel reduction function          calculate greylevel restoration function ← 4

**Pass 2**

*reduction LUT*

reduce greylevels — 5          *restoration LUT*

*modified image*

separate noise bits — 6

*modified image*

calculate prediction — 7

*prediction*

compare with modified image — 8          *noise bits*

*error > 6*          *error <= 6*

11 — output literal value          10 — output literal bitcode          9 — output error bitcode

**Output data**

*compressed image*

## Fig. 15